# EUROPÄISCHE PATENTSCHRIFT

(11) **EP 4 361 462 B1**
(45) Veröffentlichungstag und Bekanntmachung des Hinweises auf die Patenterteilung: **03.12.2025**
(21) Anmeldenummer: 23205751.3
(22) Anmeldetag: 25.10.2023
(51) Int. Cl.: F16D 55/228, F16D 65/095

(54) **HYDRAULISCHE BREMSANORDNUNG FÜR EIN WENIGSTENS TEILWEISE MUSKELBETRIEBENES FAHRRAD**
HYDRAULIC BRAKE ASSEMBLY FOR A BICYCLE OPERATED AT LEAST PARTIALLY BY MUSCLE
ENSEMBLE FREIN HYDRAULIQUE POUR BICYCLETTE ENTRAÎNÉE AU MOINS PARTIELLEMENT PAR LA FORCE MUSCULAIRE

(30) Priorität: 27.10.2022 DE 102022128553
(43) Veröffentlichungstag der Anmeldung: 01.05.2024
(73) Patentinhaber: Trickstuff GmbH, 79292 Pfaffenweiler (DE)
(72) Erfinder: Liedler, Klaus, 79294 Sölden (DE)
(74) Vertreter: BSB Patentanwälte Schütte & Engelen Partnerschaft mbB

(56) Entgegenhaltungen:
- CN-A- 112 105 833
- DE-A1- 102018 006 341
- DE-A1- 2 236 749
- US-A1- 2003 070 887
- US-A1- 2015 041 259
- US-A1- 2021 396 283

## Beschreibung

Die vorliegende Erfindung betrifft eine hydraulische Bremsanordnung für ein wenigstens teilweise muskelbetriebenes Fahrrad und umfasst wenigstens eine Nehmereinheit, welche mit einer Gebereinheit fluidisch verbindbar ist. Die Nehmereinheit umfasst wenigstens einen Bremssattel und wenigstens zwei Bremsbeläge.

Hydraulische Scheibenbremsen für Fahrräder bieten auch bei schnellen Fahrten und beispielsweise im Radsportbereich bei Rennrädern oder Mountainbikes ein sicheres Bremsen. Zudem können damit auch Elektrofahrräder oder Stadträder sicher gebremst werden. Das Zusammenspiel des Bremssattels mit den im Bremsschacht aufgenommenen Bremsbelägen übt einen entscheidenden Einfluss auf das Bremsverhalten und auch auf die Geräuschemissionen von hydraulischen Scheibenbremsen aus. Hydraulische Bremsvorrichtungen für Fahrräder und Fahrzeuge sind zum Beispiel aus US 2003/070887 A1, DE 10 2018 006341 A1 und US 2015/041259 A1 bekannt.

In der Regel weist der Bremssattel einen Schacht auf, in dem die Bremsbeläge aufgenommen sind. Dort ist der Bremssattel üblicherweise mit Stützwänden ausgestattet, welche sich in axialer Richtung (also parallel zur Drehachse der Bremsscheibe) erstrecken und den Bremsschacht dadurch in Umfangsrichtung teilweise verschließen.

Bei einem Bremsvorgang werden die Bremsbeläge mit einer Zuspannvorrichtung gegen die Bremsscheibe gepresst und erfahren dadurch eine Kraft in Richtung der Drehbewegung der Bremsscheibe. Diese Kraft drückt die Bremsbeläge gegen die in Drehrichtung vor ihnen liegenden Stützwände.

Die Stützwände dienen also dazu, dass sich die Bremsbeläge bei einem Bremsvorgang daran abstützen können. Ohne die Stützwände würden die Bremsbeläge von der rotierenden Bremsscheibe mitgerissen und aus dem Bremssattel herausgeschleudert. Üblicherweise werden die in Umfangsrichtung auftretenden Bremskräfte ausschließlich über die Stützwände abgefangen. Um die enormen Kräfte zuverlässig abfangen zu können, werden die Stützwände meist einstückig an dem Bremssattel ausgebildet.

Stifte, welche sich durch die Bremsbeläge erstrecken, dienen meist als zusätzliche Sicherung gegen ein Herausspringen aus dem Bremsschacht, ohne eine Funktion bei der Lastaufnahme zu erfüllen. Häufig ist an den Stiften eine Feder aufgenommen, welche die Bremsbeläge in Richtung ihrer Ruheposition vorspannt.

Meist sind an beiden gegenüberliegenden Enden des Bremssattels Stützwände vorgesehen. So können sich die Bremsbeläge auch dann abstützen, wenn sich die Bremsscheibe entgegen ihrer Hauptdrehrichtung für die Vorwärtsfahrt dreht. So werden die Bremsbeläge sicher im Bremssattel gehalten, wenn auf das Fahrrad bei betätigter Bremse eine rückwärts gerichtete Kraft wirkt. Das ist beispielsweise der Fall, wenn das Fahrrad an einem steilen Hang mit der Bremse gegen Zurückrollen gehalten wird oder der Anwender/Fahrradfahrer das Fahrrad am Sattel nach hinten drückt.

Ein wichtiger Aspekt bei der Entwicklung von hydraulischen Scheibenbremsen ist die Vermeidung von unerwünschten Geräuschemissionen, welche beim Bremsen auftreten können (z. B. Quietschen). Zudem kann es beim Bremsen zu einem niederfrequenten Schwingen der Fahrradgabel bzw. des Rahmens kommen. Das führt zu einem verschlechterten Lenkverhalten und kann sogar zu einer technischen Beeinträchtigung der Gabel bzw. des Rahmens führen. Die bekannten Lösungen weisen demgegenüber einen Verbesserungsbedarf auf.

Ein weiterer Aspekt betrifft die Abfuhr der beim Bremsen entstehenden Wärme. Üblicherweise wird versucht, die Wärme im Wesentlichen über die Bremsscheibe abzuführen. Dennoch erhitzen sich beispielsweise beim Bremsen während einer längeren Bergabfahrt bzw. bei Downhill-Mountainbikes auch die Bremsbeläge oft erheblich. Die Wärme überträgt sich von den Bremsbelägen weiter in den Bremssattel, wodurch es zu einer unerwünschten Erhitzung des Hydraulikfluids kommen kann. Daher sind Bremsbeläge bekannt geworden, an denen Kühlrippen angeordnet sind. Das bringt jedoch ein höheres Gewicht und einen größeren Bauraumbedarf und Windwiderstand sowie mitunter Klappergeräusche mit sich.

Besonders wichtig bei der Entwicklung von hydraulischen Scheibenbremsen für Fährräder und insbesondere Sportfahrräder ist auch das Gewicht. Daher werden bei Fährrädern üblicherweise nur Bremssättel eingesetzt, welche als Festsattel ausgebildet sind. Ein schwimmender Sattel bietet zwar den Vorteil, dass auf einer Seite der Kolben eingespart werden kann. Allerdings wäre dann eine erheblich dickere (steifere) Bremsscheibe notwendig, damit sie den Bremssattel axial ausrichten kann. Hinzu kommen noch die Bauteile zur Lagerung des schwimmenden Sattels. Insgesamt erhöht sich dadurch das Gewicht viel zu sehr. Zudem schleifen die Beläge von Schwimmsätteln im Betrieb oft minimal. Das kann bei Autos und Motorräder problemlos in Kauf genommen werden. Bei Fahrrädern hingegen ist ein Schleifen aufgrund der Reibungsverluste und der Geräuschentwicklung in der Regel nicht akzeptabel.

Es ist daher die Aufgabe der vorliegenden Erfindung, eine in Bezug auf die zuvor diskutierten Schwachstellen (z. B. Geräuschemissionen, Schwingungen, Wärmeentwicklung) verbesserte Bremsanordnung zur Verfügung zu stellen. Dabei soll die Bremsanordnung besonders sicher und zuverlässig funktionieren und zugleich konstruktiv unaufwendig aufgebaut sein. Denn gerade bei Wettkampf- bzw. Sportfahrrädern spielen Zuverlässigkeit und die Fähigkeit zur schnellen Wartung eine große Rolle. Ergänzend zu den zuvor genannten Anforderungen soll die Bremsanordnung vorzugsweise möglichst leicht sein, um das Gesamtgewicht des Fahrrads nicht unnötig zu erhöhen.

Diese Aufgabe wird gelöst durch eine Bremsanordnung mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels. Die erfindungsgemäße hydraulische Bremsanordnung ist für ein wenigstens teilweise muskelbetriebenes Fahrrad vorgesehen. Die Bremsanordnung umfasst wenigstens eine mit einer Gebereinheit fluidisch verbindbare Nehmereinheit. Die Nehmereinheit umfasst wenigstens einen insbesondere als Festsattel ausgebildeten Bremssattel und wenigstens zwei (nur zwei) Bremsbeläge. Die Bremsbeläge weisen jeweils einen einlaufseitigen Abschnitt und einen auslaufseitigen Abschnitt auf oder bestehen aus solchen. Der Bremssattel umfasst einen Sattelkörper, welcher wenigstens eine Bremsscheibe übergreift. Die Nehmereinheit kann wenigstens eine Bremsscheibe umfassen. Der Bremssattel umfasst eine Aufnahmeeinrichtung zur Anbindung der Bremsbeläge an den Sattelkörper. Vorzugsweise umfasst der Sattelkörper zwei Schenkeleinrichtungen und eine die Schenkeleinrichtungen verbindende Gehäusebrückeneinrichtung. Dabei umfasst die Aufnahmeeinrichtung wenigstens eine Schwenklagereinrichtung und wenigstens eine Drehmomentabstützung. Vorzugsweise umfasst die Schwenklagereinrichtung wenigstens ein an beiden Schenkeleinrichtungen fest montiertes Bolzenelement und besonders bevorzugt nur ein an beiden Schenkeleinrichtungen fest montiertes Bolzenelement. Dabei sind die einlaufseitigen Abschnitte der Bremsbeläge (der beiden bzw. aller vorgesehenen Bremsbeläge) schwenkbar an der Schwenklagereinrichtung angebunden (insbesondere befestigt). Mit anderen Worten, insbesondere sind die Bremsbeläge an ihren einlaufseitigen Abschnitten schwenkbar an der Schwenklagereinrichtung angebunden. Mittels der Drehmomentabstützung ist eine Schwenkbewegung der Bremsbeläge (der beiden bzw. aller vorgesehenen Bremsbeläge) (insbesondere der auslaufseitigen Hälften) wenigstens nach radial außen bei einem Bremsvorgang blockierbar (insbesondere ab einem bestimmten Schwenkwinkel). Insbesondere blockiert die Drehmomentabstützung die Schwenkbewegung formschlüssig. Die Bremsbeläge sind insbesondere soweit schwenkbar, wie es die Drehmomentabstützung zulässt. Dabei sind die auslaufseitigen Abschnitte der Bremsbeläge wenigstens in Umfangsrichtung in eine Hauptdrehrichtung mit einer definierten Beabstandung zur Aufnahmeeinrichtung (insbesondere zur Drehmomentabstützung und/oder zur Schwenklagereinrichtung) und zum Sattelkörper angeordnet. Insbesondere sind dadurch die auslaufseitigen Abschnitte der Bremsbeläge (der beiden bzw. aller vorgesehenen Bremsbeläge) bei einem Bremsvorgang nicht in Umfangsrichtung in die Hauptdrehrichtung abstützbar.

Die erfindungsgemäße Bremsanordnung bietet viele Vorteile. Einen erheblichen Vorteil bietet die Aufnahmeeinrichtung mit der Schwenklagereinrichtung und der Drehmomentabstützung. Dadurch können die Bremsbeläge so am Bremssattel verankert werden, dass sie bei einem Bremsvorgang gezogen und nicht gedrückt bzw. gestaucht werden. Die Erfindung ermöglicht, dass die in die Hauptdrehrichtung auftretenden Bremskräfte zu einem erheblichen Teil und z. B. zu 90 % oder mehr als Zugkräfte auf die Bremsbeläge und den Bremssattel wirken. Von dort werden die Kräfte dann weiter in eine Tragstruktur des Fahrrads und beispielsweise einen Rahmen oder eine Gabel geleitet. Mit anderen Worten, die Bremsbeläge werden beim Bremsen im Wesentlichen auf Zug und nicht auf Druck belastet. Zudem ergibt sich eine besonders vorteilhafte Lasteinleitung der Bremskräfte in den Bremssattel. Dadurch werden unerwünschte Geräuschemissionen und niederfrequente Schwingungen beim Bremsen zuverlässig vermieden. Zudem kann auf Stützwände zum Abstützen der Bremsbeläge in Umfangsrichtung verzichtet werden, sodass Gewicht eingespart werden kann. Durch die fehlenden Stützwände können die Bremsbeläge und die Bremsscheibe besser mit Fahrtwind gekühlt werden. Zudem strahlt die Bremsscheibe dadurch ihre Wärme besser an die Umgebung und weniger an den Bremssattel ab.

Insbesondere ist die Beabstandung auch bei einem Bremsvorgang vorhanden. Insbesondere sind die auslaufseitigen Abschnitte der Bremsbeläge wenigstens in Umfangsrichtung in die Hauptdrehrichtung bei einem Bremsvorgang immer mit der definierten Beabstandung zur Aufnahmeeinrichtung und zum Sattelkörper angeordnet. Insbesondere ist das bei allen bestimmungsgemäß vorgesehenen Bremsvorgängen und insbesondere auch bei allen Betriebszuständen der Bremsanordnung vorgesehen.

Insbesondere ist die Beabstandung wenigstens abschnittsweise zwischen den auslaufseitigen Abschnitten und dem Sattelkörper und der Drehmomentabstützung ausgebildet. Insbesondere sind die auslaufseitigen Abschnitte und der Sattelkörper und die Drehmomentabstützung (insbesondere der Stützbolzen) wenigstens in Umfangsrichtung in die Hauptdrehrichtung beabstandet zueinander angeordnet. Insbesondere sind die auslaufseitigen Abschnitte wenigstens in Umfangsrichtung in die Hauptdrehrichtung berührungslos zum Sattelkörper und zu allen am Sattelkörper befestigten Bauteilen angeordnet.

Es ist vorteilhaft und bevorzugt, dass die bei einem Bremsvorgang in Umfangsrichtung insbesondere in die Hauptdrehrichtung auftretenden Bremskräfte nur über die einlaufseitigen Abschnitte der Bremsbeläge an den Bremssattel weitergegeben werden. Insbesondere werden diese Bremskräfte nicht von den auslaufseitigen Abschnitten an den Bremssattel weitergegeben.

Bevorzugt ist auch, dass die bei einem Bremsvorgang in Umfangsrichtung insbesondere in die Hauptdrehrichtung auftretenden Bremskräfte nur von der Schwenklagereinrichtung aufnehmbar sind. Insbesondere sind diese Bremskräfte nicht von der Drehmomentabstützung aufnehmbar. Insbesondere sind (im Wesentlichen) sämtliche bei einem Bremsvorgang auf die Bremsbeläge wirkenden Bremskräfte von der Zugankereinrichtung in Kombination mit der Drehmomentabstützung aufnehmbar.

Insbesondere ist die Schwenklagereinrichtung dazu geeignet und ausgebildet, bei einem Bremsvorgang (bei dem sich die Bremsscheibe in die Hauptdrehrichtung dreht) nur auf Zug belastet zu werden. Insbesondere stellt die Schwenklagereinrichtung einen Zuganker für die Bremsbeläge bereit. Es ist möglich, dass die in radialer Richtung (nach radial innen und/oder außen) auftretenden Bremskräfte wenigstens teilweise von der Schwenklagereinrichtung aufgenommen werden können.

Insbesondere werden die bei einem Bremsvorgang in radialer Richtung und insbesondere nach radial außen auftretenden Bremskräfte (im Wesentlichen) nur von den auslaufseitigen Abschnitten der Bremsbeläge an den Bremssattel weitergegeben. Insbesondere werden diese Bremskräfte (im Wesentlichen) nicht von den einlaufseitigen Abschnitten an den Bremssattel weitergegeben. Insbesondere sind die bei einem Bremsvorgang in radialer Richtung und insbesondere nach radial außen auftretenden Bremskräfte (im Wesentlichen) nur von der Drehmomentabstützung aufnehmbar und insbesondere nicht oder nur zu einem sehr geringen Anteil von der Schwenklagereinrichtung aufnehmbar.

Die Schwenklagereinrichtung umfasst insbesondere wenigstens ein Bolzenelement. Insbesondere sind die Bremsbeläge jeweils schwenkbar an dem wenigstens einen Bolzenelement aufgenommen. Insbesondere blockiert die Drehmomentabstützung die Schwenkbewegung des Bremsbelags um das Bolzenelement nach radial außen.

Das Bolzenelement ist insbesondere stabförmig. Das Bolzenelement ist insbesondere prismatisch und vorzugsweise zylindrisch. Das Bolzenelement kann auch eine andere geeignete stabförmige Geometrie aufweisen. Das Bolzenelement ist insbesondere wenigstens im Bereich der daran gelagerten Bremsbeläge zylindrisch ausgebildet. Insbesondere ist das Bolzenelement dazu geeignet und ausgebildet, die in Umfangsrichtung in die Hauptdrehrichtung wirkenden Bremskräfte aufzunehmen und in den Sattelkörper weiterzuleiten. Das Bolzenelement kann einteilig oder auch mehrteilig sein. Beispielweise kann das Bolzenelement ein Schraubenteil und ein Mutternteil umfassen.

Insbesondere erstreckt sich das Bolzenelement durch die einlaufseitigen Abschnitte der Bremsbeläge. Insbesondere weisen die Bremsbeläge jeweils wenigstens eine erste Aufnahmeöffnung auf. Insbesondere ist die erste Aufnahmeöffnung umfänglich geschlossen (sog. erste Durchgangsöffnung). Möglich ist auch eine umfänglich offene erste Aufnahmeöffnung (z. B. eine hakenförmige Ausgestaltung). Im Rahmen der vorliegenden Erfindung wird unter einer ersten Aufnahmeöffnung insbesondere ein geeignetes Mittel verstanden, welches an dem Bolzenelement schwenkbar gelagert werden kann.

Insbesondere erstreckt sich das Bolzenelement durch die erste Aufnahmeöffnung. Insbesondere sind die Bremsbeläge mittels des Bolzenelements verliersicher am Sattelkörper aufgenommen. Insbesondere dient das Bolzenelement als Verliersicherung und zugleich zur Krafteinleitung in den Sattelkörper.

Vorzugsweise ist wenigstens ein gemeinsames Bolzenelement für die wenigstens zwei Bremsbeläge vorgesehen. Insbesondere erstreckt sich das gemeinsame Bolzenelement durch beide Bremsbeläge. Insbesondere sind die Bremsbeläge um das gemeinsame Bolzenelement schwenkbar (soweit es die Drehmomentabstützung zulässt). Dann ist insbesondere vorgesehen, dass das Bolzenelement außerhalb des Radius der aufgenommenen Bremsscheibe angeordnet ist. Möglich ist aber auch, dass für die wenigstens zwei Bremsbeläge jeweils wenigstens ein Bolzenelement vorgesehen ist. Dann können die Bolzenelemente außerhalb oder auch innerhalb des Radius der aufgenommenen Bremsscheibe (bzw. axial neben der Bremsscheibe) liegen. Die Bolzenelemente können z. B. als jeweils ein Vorsprung am Sattelkörper ausgebildet sein. Ein solcher Vorsprung kann separat zum Sattelkörper ausgebildet sein oder Teil des Sattelkörpers sein.

In einer vorteilhaften Ausgestaltung ist das Bolzenelement (lösbar) am Sattelkörper befestigt und vorzugsweise verschraubt. Insbesondere muss das Bolzenelement vom Sattelkörper gelöst werden, um die Bremsbeläge entnehmen zu können. Insbesondere muss das Bolzenelement aus den Aufnahmeöffnungen herausgezogen werden. Das Bolzenelement kann auch wenigstens teilweise fest (unlösbar) mit dem Sattelkörper verbunden sein.

In einer vorteilhaften Weiterbildung umfasst die Drehmomentabstützung wenigstens ein Stützelement. Insbesondere sind die auslaufseitigen Abschnitte wenigstens nach radial außen an dem wenigstens einen Stützelement abstützbar. Insbesondere sind die auslaufseitigen Abschnitte bei einem Bremsvorgang an dem Stützelement abstützbar.

Insbesondere ist das Stützelement (lösbar) am Sattelkörper befestigt und vorzugsweise verschraubt. Insbesondere ist das Stützelement separat zum Sattelkörper ausgebildet. Insbesondere sind das Stützelement und der Sattelkörper nicht einstückig miteinander verbunden. Möglich ist aber auch, dass das Stützelement durch einen Abschnitt des Sattelkörpers bereitgestellt wird. Insbesondere ist das Stützelement dann einstückig mit dem Sattelkörper verbunden.

Das Bolzenelement und/oder das Stützelement können mit jeweils wenigstens einem Sicherungselement gegen unbeabsichtigtes Lösen gesichert sein (Federklammer, Sicherungsmutter, Schraubenkleber etc.).

Das Stützelement ist insbesondere stabförmig ausgebildet. Insbesondere ist das Stützelement prismatisch und vorzugsweise zylindrisch ausgebildet. Insbesondere ist das Stützelement wenigstens im Bereich der daran gelagerten Bremsbeläge zylindrisch ausgebildet. Das Stützelement kann aber auch eine andere geeignete stabförmige oder auch nicht-stabförmige Geometrie aufweisen.

Das Stützelement kann auch als ein Vorsprung des Sattelkörpers ausgebildet sein. Der Vorsprung kann außerhalb des Radius der aufgenommenen Bremsscheibe angeordnet. Der Vorsprung kann aber auch innerhalb des Radius der aufgenommenen Bremsscheibe liegen (bzw. axial neben der Bremsscheibe angeordnet sein). Der Vorsprung kann separat zum Sattelkörper ausgebildet sein oder Teil des Sattelkörpers sein.

Vorzugsweise ist (nur) ein gemeinsames Stützelement für die wenigstens zwei Bremsbeläge vorgesehen. Insbesondere sind die Bremsbeläge an (nur) einem gemeinsamen Stützelement abstützbar. Insbesondere ist nur ein Stützelement für alle Bremsbeläge vorgesehen. Dann ist insbesondere vorgesehen, dass das Stützelement außerhalb des Radius der aufgenommenen Bremsscheibe angeordnet ist. Möglich ist aber auch, dass für die wenigstens zwei Bremsbeläge jeweils wenigstens ein Stützelement vorgesehen ist. Dann können die Stützelemente außerhalb oder auch innerhalb des Radius der aufgenommenen Bremsscheibe (bzw. axial neben der Bremsscheibe) liegen.

Insbesondere erstreckt sich das wenigstens eine Stützelement durch die auslaufseitigen Abschnitte der Bremsbeläge. Insbesondere weisen die Bremsbeläge jeweils wenigstens eine zweite Aufnahmeöffnung auf. Insbesondere ist die zweite Aufnahmeöffnung umfänglich geschlossen (sog. zweite Durchgangsöffnung). Insbesondere muss das Stützelement vom Sattelkörper gelöst werden, um die Bremsbeläge entnehmen zu können. Insbesondere muss das Stützelement dazu aus den Aufnahmeöffnungen herausgezogen werden. Insbesondere dient das Stützelement zur Verliersicherung und zugleich zur Krafteinleitung in den Sattelkörper.

Es ist möglich, dass die zweite Aufnahmeöffnung umfänglich offen ausgebildet ist (sog. Einstich). Insbesondere ist dann möglich, dass das Stützelement am Sattelkörper verbleiben kann, um die Bremsbeläge entnehmen zu können. Beispielsweise ist die zweite Aufnahmeöffnung als ein gebogener oder gerader Abschnitt der auslaufseitigen Abschnitte ausgebildet. Der gebogene Abschnitt kann beispielsweise U-förmig oder hakenförmig ausgebildet sein. Möglich ist auch eine Nase oder eine andere geeignete Art von Abstützung. Im Rahmen der vorliegenden Erfindung wird unter einer zweiten Aufnahmeöffnung insbesondere ein geeignetes Abstützteil verstanden, an welcher das wenigstens eine Stützelement zur Abstützung des Drehmoments angelegt werden kann. Insbesondere können dann zweite Aufnahmeöffnung und Abstützteil synonym verwendet werden.

Es ist bevorzugt und vorteilhaft, dass wenigstens die zweiten Aufnahmeöffnungen ein Übermaß zum Stützelement aufweisen. Insbesondere ist das Übermaß so bemessen, dass die auslaufseitigen Abschnitte bei einem Bremsvorgang nicht in Umfangsrichtung in die Hauptdrehrichtung an dem Stützelement abstützbar sind. Insbesondere sind die auslaufseitigen Abschnitte während des Bremsvorgangs in Umfangsrichtung in die Hauptdrehrichtung beabstandet vom Stützelement. Insbesondere wird durch das Übermaß bewirkt, dass das Stützelement mit einem definierten Spiel in den zweiten Aufnahmeöffnungen aufnehmbar ist. Insbesondere weisen auch die ersten Aufnahmeöffnungen ein Übermaß zum Stützelement auf.

Vorzugsweise weisen die ersten Aufnahmeöffnungen und die zweiten Aufnahmeöffnungen das gleiche Übermaß zum Stützelement auf. Insbesondere sind die ersten und zweiten Aufnahmeöffnungen identisch dimensioniert. Es ist möglich, dass die ersten und zweiten Aufnahmeöffnungen identisch sind.

Es ist bevorzugt und vorteilhaft, dass wenigstens das Bolzenelement exzentrisch durch die ersten Aufnahmeöffnungen verläuft. Möglich und vorteilhaft ist auch, dass wenigstens das Stützelement exzentrisch durch die zweiten Aufnahmeöffnungen verläuft. Eine solche Ausgestaltung ist insbesondere dann vorgesehen, wenn die ersten und zweiten Aufnahmeöffnungen das gleiche Übermaß aufweisen. Möglich ist auch, dass das Bolzenelement oder das Stützelement zentriert (mittig) durch die ersten bzw. zweiten Aufnahmeöffnungen verlaufen.

Das Stützelement und das Bolzenelement weisen insbesondere einen ersten Abstand zueinander auf. Insbesondere weisen die ersten und zweiten Aufnahmeöffnungen jeweils eines Bremsbelags einen zweiten Abstand zueinander auf. Dabei ist bevorzugt und vorteilhaft, dass der erste Abstand größer als der zweite Abstand ist. Die Abstände beziehen sich insbesondere auf die Längsachsen des Stützelements und des Bolzenelements sowie der Aufnahmeöffnungen. Die Abstände können daher auch als Längsachsenabstände bezeichnet werden. Insbesondere verlaufen die Längsachsen dabei parallel zueinander.

Insbesondere sind der erste und der zweite Abstand so bemessen, dass das Bolzenelement exzentrisch durch die ersten Aufnahmeöffnungen verläuft, wenn das Stützelement zentriert durch die zweiten Aufnahmeöffnungen verläuft. Insbesondere wird dadurch bewirkt, dass die einlaufseitigen Abschnitte bei einem Bremsvorgang berührend an dem Bolzenelement anliegen, während die auslaufseitigen Abschnitte in Umfangsrichtung in die Hauptdrehrichtung beabstandet zum Stützelement sind. Das bietet neben der Aufnahme von Zugkräften auch viele Vorteile hinsichtlich des konstruktiven Aufbaus und der Wartungsfreundlichkeit.

In allen Ausgestaltungen sind die Bauteile (insbesondere die Schwenklagereinrichtung und die Drehmomentabstützung und die Bremsbeläge) vorzugsweise so dimensioniert und konstruiert, dass die hier beschriebenen Dimensionierungen und Abstände unter den bestimmungsgemäß zu erwartenden Betriebslasten eingehalten werden. Insbesondere werden dabei durch den Bremsvorgang bedingte Verformungen bzw. Deformationen und thermische Effekte berücksichtigt.

In einer vorteilhaften Weiterbildung sind die Schwenklagereinrichtung und die Drehmomentabstützung gleichartig ausgebildet. Wenn die Nehmereinheit in eine Drehrichtung betrieben wird, welche der Hauptdrehrichtung entgegengesetzt ist, dann kann die Drehmomentabstützung vorzugsweise als Schwenklagereinrichtung und die Schwenklagereinrichtung vorzugsweise als Drehmomentabstützung eingesetzt werden. Insbesondere sind dazu das Stützelement und das Bolzenelement wenigstens im Bereich des Zusammenwirkens mit den Bremsbelägen identisch ausgebildet. Insbesondere sind das Stützelement und das Bolzenelement derart gleichartig ausgebildet, dass bei einer Änderung der Drehrichtung das Stützelement als Bolzenelement und das Bolzenelement als Stützelement wirken kann.

Insbesondere dreht sich die Bremsscheibe bei einer Änderung der Drehrichtung entgegengesetzt zur Hauptdrehrichtung. Das kann durch eine Rückwärtsfahrt bedingt sein. Eine Änderung der Drehrichtung kann auch dadurch bedingt sein, dass der Bremssattel um 180° gewendet an einem Fahrrad montiert wird. Dann wird die Nehmereinheit sozusagen dauerhaft in die andere Drehrichtung betrieben. Mit den hier beschriebenen Ausführungen der Erfindung kann das sicher und zuverlässig umgesetzt werden. Insbesondere ist der Bremssattel in einer beliebigen Drehrichtung der Bremsscheibe betreibbar.

Bei einer Änderung der Drehrichtung von der Hauptdrehrichtung in die Rückwärtsdrehrichtung werden die in Umfangsrichtung in die Rückwärtsdrehrichtung auftretenden Bremskräfte über die ursprüngliche Drehmomentabstützung aufgenommen, welche dann also die neue Schwenklagereinrichtung bereitstellt. Entsprechend werden die in radialer Richtung nach radial außen auftretenden Bremskräfte von der ursprünglichen Schwenklagereinrichtung aufgenommen, welche dann die neue Drehmomentabstützung bereitstellt.

Insbesondere ist die Schwenklagereinrichtung in die Hauptdrehrichtung als Schwenklagereinrichtung und in die Rückwärtsdrehrichtung als Drehmomentabstützung einsetzbar. Insbesondere ist die Drehmomentabstützung in die Hauptdrehrichtung als Drehmomentabstützung und in die Rückwärtsdrehrichtung als Schwenklagereinrichtung einsetzbar.

Insbesondere weisen das Bolzenelement und das Stützelement wenigstens im Bereich des Zusammenwirkens mit den Bremsbelägen eine identische Querschnittsgeometrie und/oder einen identischen Durchmesser auf. Insbesondere sind die einlaufseitigen und die auslaufseitigen Abschnitte der Bremsbeläge wenigstens im Bereich des Zusammenwirkens mit der Schwenklagereinrichtung und der Drehmomentabstützung gleichartig ausgebildet. Insbesondere weisen die ersten und die zweiten Aufnahmeöffnungen dazu eine identische Querschnittsgeometrie und vorzugsweise einen identischen Durchmesser auf.

Vorzugsweise sind die Bremsbeläge wenigstens in Bezug auf ihre Anbindung an die Schwenklagereinrichtung und die Drehmomentabstützung als Gleichteil ausgebildet. Im Rahmen der vorliegenden Erfindung sind Gleichteile insbesondere solche Teile, welche unverändert gegeneinander ausgetauscht werden können. Insbesondere können die Bremsbeläge auf einer beliebigen axialen Seite der Bremsscheibe im Bremssattel eingebaut werden. Insbesondere ist ein Lochbild der ersten und zweiten Aufnahmeöffnungen symmetrisch ausgebildet. Insbesondere sind die ersten und zweiten Aufnahmeöffnungen derart symmetrisch in den Bremsbelägen angeordnet und ausgebildet, dass die wenigstens zwei Bremsbeläge beliebig gegeneinander austauschbar sind. Insbesondere sind die ersten und zweiten Aufnahmeöffnungen spiegelsymmetrisch zu einer Querachse jeweils eines Bremsbelags angeordnet.

Insbesondere sind das Bolzenelement und das Stützelement als Gleichteile ausgebildet. Insbesondere können das Bolzenelement und das Stützelement unverändert gegeneinander ausgetauscht werden. Insbesondere weist der Sattelkörper für das Bolzenelement und das Stützelement jeweils wenigstens ein Montagemittel auf. Insbesondere sind die Montagemittel gleich ausgebildet, sodass an an ihnen wahlweise das Bolzenelement oder das Stützelement befestigt werden kann.

In einer bevorzugten und vorteilhaften Ausgestaltung weist der Sattelkörper wenigstens zwei Schenkeleinrichtungen und eine Gehäusebrückeneinrichtung auf. Insbesondere verbindet die Gehäusebrückeneinrichtung die Schenkeleinrichtungen miteinander. Dabei verbinden das Bolzenelement und/oder das Stützelement die Schenkeleinrichtungen miteinander. So kann die Aufnahmeeinrichtung für die Bremsbeläge zugleich auch zur Aussteifung des Sattelkörpers eingesetzt werden. Eine solche Gehäusebrückeneinrichtung kann die Gesamtstabilität des Bremssattels erheblich verbessern.

Insbesondere ist wenigstens das Bolzenelement fest an beiden Schenkeleinrichtungen montiert und vorzugsweise verschraubt. Insbesondere ist auch das Stützelement fest an beiden Schenkeleinrichtungen montiert und vorzugsweise verschraubt. Insbesondere sind das Stützelement und/oder das Bolzenelement an wenigstens einer der Schenkeleinrichtungen (lösbar) befestigt und vorzugsweise verschraubt. Insbesondere sind das Stützelement und/oder das Bolzenelement so ausgebildet und am Sattelkörper befestigt, dass eine aussteifende Wirkung der Gehäusebrückeneinrichtung unterstützt wird. Insbesondere erstrecken sich das Bolzenelement und/oder das Stützelement von einer Schenkeleinrichtung in die gegenüberliegende Schenkeleinrichtung. Insbesondere verlaufen das Bolzenelement und/oder das Stützelement parallel zur Gehäusebrückeneinrichtung.

Insbesondere bilden das Stützelement und/oder das Bolzenelement jeweils eine Struktur, welche die Gehäusebrückeneinrichtung in Bezug auf deren stabilisierende Wirkung bzw. statischen Eigenschaften ergänzt. Vorzugsweise bilden das Stützelement und/oder das Bolzenelement jeweils einen Zuganker, welcher in beiden Schenkeleinrichtungen verankert ist. Insbesondere können die Schenkeleinrichtungen dadurch beim Bremsen nicht nach axial außen von der Bremsscheibe weggebogen werden; Insbesondere fängt der Zuganker (nach axial außen wirkende) Kräfte auf, welche die Schenkeleinrichtungen von der Bremsscheibe aus nach axial außen drücken.

Die Schenkeleinrichtungen und die Gehäusebrückeneinrichtung sind insbesondere einstückig miteinander verbunden. Insbesondere ist der Sattelkörper einstückig ausgebildet. Insbesondere verlaufen die Schenkeleinrichtungen wenigstens abschnittsweise axial neben der Bremsscheibe. Insbesondere ist in wenigstens einer der Schenkeleinrichtungen wenigstens eine Bremskolbeneinheit aufgenommen. Insbesondere sind in wenigstens einer der Schenkeleinrichtungen die Montagemittel zur Befestigung von Bolzenelement und Stützelement angeordnet.

Insbesondere weist keine der Schenkeleinrichtungen eine Struktur auf, welche axial neben der Bremsscheibe und in Umfangsrichtung (in die Hauptdrehrichtung) vor den Bremsbelägen verläuft und an welcher die Bremsbeläge bei einem Bremsvorgang abgestützt werden könnten. Insbesondere sind die Schenkeleinrichtungen dort offen ausgebildet. Dadurch wird die Kühlwirkung erheblich verbessert, ohne dass zusätzliche Bauteile nötig wären. Insbesondere wird die Funktion einer solchen Struktur durch die Schwenklagereinrichtung und die Drehmomentabstützung bereitgestellt.

Insbesondere sind die Bremsbeläge ausschließlich indirekt mittels des Bolzenelements und des Stützelements am Sattelkörper angebunden. Insbesondere berühren die Bremsbeläge den Sattelkörper nur indirekt über das Bolzenelement und das Stützelement und gegebenenfalls über eine oder mehrere Bremskolbeneinheiten. Insbesondere erfolgt keine direkte Berührung zwischen den Bremsbelägen und dem Sattelkörper. Insbesondere weisen die Bremsbeläge keinen direkten Kontakt zu den Schenkeleinrichtungen und der Gehäusebrückeneinrichtung auf. Auch das bietet Vorteile hinsichtlich Geräuschemissionen und Wärmeleitung in das Hydraulikfluid sowie für die Selbstreinigung der Beläge.

Insbesondere umschließt die Gehäusebrückeneinrichtung wenigstens zwei Aussparungen. Insbesondere sind die wenigstens zwei Aussparungen von radial außen zugänglich. Insbesondere verlaufen das Bolzenelement und das Stützelement unterhalb jeweils einer Aussparung. Insbesondere verläuft die Gehäusebrückeneinrichtung radial weiter außen als das Bolzenelement und das Stützelement. Insbesondere sind das Stützelement und das Bolzenelement radial innen von der Gehäusebrückeneinrichtung angeordnet. Insbesondere sind das Bolzenelement und/oder das Stützelement dazu geeignet und ausgebildet, den in den Aussparungen fehlenden Werkstoff in Bezug auf seine stabilisierende Wirkung zu ersetzen.

Es ist möglich, dass in der Gehäusebrückeneinrichtung wenigstens ein Fluidkanal ausgebildet ist. Insbesondere verläuft der Fluidkanal parallel zu dem Bolzenelement und dem Stützelement. Insbesondere dient der Fluidkanal für das Hydraulikfluid.

Die Anmelderin behält sich vor, einen Bremssattel zu beanspruchen, welcher zur Verwendung in der erfindungsgemäßen hydraulischen Bremsanordnung geeignet und ausgebildet ist. Insbesondere ist der Bremssattel so ausgebildet, wie es hier beschrieben ist.

Der Bremsbelag ist zur Verwendung in der erfindungsgemäßen hydraulischen Bremsanordnung geeignet und ausgebildet. Insbesondere ist der Bremsbelag so ausgebildet, wie es hier beschrieben ist. Insbesondere sind wenigstens zwei erfindungsgemäße Bremsbeläge (paarweise) in einem Bremssattel einsetzbar.

Der Begriff "einlaufseitig" kann im Rahmen der vorliegenden Erfindung insbesondere synonym mit "auf der Einlaufseite" verwendet werden. Die Einlaufseite ist insbesondere dort, wo die Bremsscheibe (bezogen auf ihre Hauptdrehrichtung) in den Bremssattel eintritt. Der Begriff "auslaufseitig" kann im Rahmen der vorliegenden Erfindung insbesondere synonym mit "auf der Auslaufseite" verwendet werden. Die Auslaufseite ist insbesondere dort, wo die Bremsscheibe (bezogen auf ihre Hauptdrehrichtung) aus dem Bremssattel austritt. Einlaufseite und Auslaufseite beziehen sich insbesondere auf eine Hauptdrehrichtung der Bremsscheibe.

Die Hauptdrehrichtung entspricht insbesondere der Drehrichtung für eine Vorwärtsfahrt. Die im Rahmen der vorliegenden Erfindung gemachten Angaben zur Anordnung der Bauteile beziehen sich insbesondere auf einen bestimmungsgemäßen Montagezustand der Bremsanordnung. Unter einer Bewegung nach radial außen wird insbesondere die Schwenkbewegung des auslaufseitigen Abschnitts um die Schwenkachse der Schwenklagereinrichtung verstanden. Diese Bewegung kann auch eine tangentiale Bewegungskomponente umfassen.

Insbesondere werden die Bremsbeläge jeweils durch einen einlaufseitigen und einen auslaufseitigen Abschnitt bereitgestellt. Insbesondere bestehen die Bremsbeläge jeweils aus dem einlaufseitigen Abschnitt und dem auslaufseitigen Abschnitt. Insbesondere kann der Bremsbelag mit all seinen Bestandteilen in zwei (gedachte) Abschnitte aufgeteilt werden, nämlich den einlaufseitigen Abschnitt und den auslaufseitigen Abschnitt. Insbesondere ist der einlaufseitige Abschnitt eine Hälfte des Bremsbelags. Insbesondere ist der auslaufseitige Abschnitt eine Hälfte des Bremsbelags. Die Abschnitte können auch als Hälften bezeichnet werden (dann können im Rahmen der vorliegenden Erfindung "Abschnitt" und "Hälfte" synonym verwendet werden). Möglich ist auch eine asymmetrische bzw. außermittige Aufteilung des Bremsbelags in die zwei Abschnitte.

Insbesondere sind die Bremsbeläge (insbesondere die auslaufseitigen Abschnitte) an der Drehmomentabstützung wenigstens nach radial außen abstützbar, sodass die Schwenkbarkeit der Bremsbeläge nach radial außen formschlüssig blockiert ist. Insbesondere blockiert die Drehmomentabstützung die Schwenkbewegung nur in radialer Richtung und vorzugsweise nur nach radial außen. Die Bremsbeläge können sich insbesondere an der Schwenklagereinrichtung nur so weit drehen, wie es die Drehmomentabstützung zulässt. Insbesondere sind die Bremsbeläge an der Drehmomentabstützung abstützbar, wenn die Bremsbeläge bei einem Bremsvorgang um eine Schwenkachse der Schwenklagereinrichtung nach radial außen schwenken.

Insbesondere ist die Schwenklagereinrichtung in Bezug auf die Hauptdrehrichtung der Bremsscheibe für eine Vorwärtsfahrt vor der Drehmomentabstützung an dem Sattelkörper angeordnet. Insbesondere ist die Drehmomentabstützung in Bezug auf die Hauptdrehrichtung hinter der Schwenklagereinrichtung angeordnet. Insbesondere verläuft eine Schwenkachse der Schwenklagereinrichtung quer zur Umfangsrichtung der aufzunehmenden Bremsscheibe und insbesondere parallel zur Drehachse der Bremsscheibe.

Die Schwenklagereinrichtung (insbesondere das Bolzenelement) und/oder die Drehmomentabstützung (insbesondere der Stützbolzen) erstrecken sich insbesondere (nur) außerhalb des Radius der aufgenommenen Bremsscheibe und insbesondere nicht axial neben der Bremsscheibe. Möglich ist aber auch, dass sich die Schwenklagereinrichtung (insbesondere das Bolzenelement) und/oder die Drehmomentabstützung (insbesondere der Stützbolzen) innerhalb des Radius der aufgenommenen Bremsscheibe und insbesondere (nur) axial neben der Bremsscheibe erstrecken. In einer solchen Ausführung ist dann insbesondere vorgesehen, dass an den Schenkeleinrichtungen jeweils ein Teil der Schwenklagereinrichtung und/oder der Drehmomentabstützung angeordnet ist. Die Aufnahmeeinrichtung umfasst insbesondere wenigstens die Drehmomentabstützung und die Schwenklagereinrichtung oder wird durch diese gebildet.

Insbesondere berührt die Schwenklagereinrichtung nur die einlaufseitigen Hälften. Insbesondere ist die Schwenklagereinrichtung zu den auslaufseitigen Abschnitte beabstandet angeordnet. Insbesondere berührt die Drehmomentabstützung nur die auslaufseitigen Hälften. Insbesondere ist die Drehmomentabstützung zu den einlaufseitigen Abschnitte beabstandet angeordnet.

Insbesondere erfolgt außerhalb der Aufnahmeeinrichtung, vorzugsweise außerhalb der Schwenklagereinrichtung und der Drehmomentabstützung, keinerlei Einleitung von Bremskräften in den Sattelkörper. Insbesondere weist die Schwenklagereinrichtung selbst keine Vorrichtung zur Drehmomentabstützung auf. Insbesondere benötigt die Schwenklagereinrichtung zur Verhinderung einer ungewollten Schwenkbewegung der Bremsbeläge bei einem Bremsvorgang die Drehmomentabstützung. Möglich ist aber auch, dass die Schwenklagereinrichtung selbst eine Vorrichtung zur (unterstützenden) Drehmomentabstützung aufweist. Beispielsweise kann die Schwenklagereinrichtung Strukturen aufweisen, welche die Schwenkbewegung ab einem bestimmten Schwenkwinkel formschlüssig blockiert.

Die Bremsbeläge umfassen insbesondere jeweils wenigstens einen Tragkörper und jeweils wenigstens einen Belagkörper. Insbesondere ist der Belagkörper an dem Tragkörper befestigt. Insbesondere sind die Aufnahmeöffnungen an dem Tragkörper angeordnet. Insbesondere reibt der Belagkörper beim Bremsvorgang an der Bremsscheibe. Die Bremsbeläge sind insbesondere mittels der axial verschiebbar am Sattelkörper angebunden. Insbesondere sind die Bremsbeläge quer zur Umfangsrichtung verschiebbar an der Aufnahmeeinrichtung und insbesondere an der Schwenklagereinrichtung und der Drehmomentabstützung gelagert.

Insbesondere weisen die Bremsbeläge jeweils wenigstens eine (erste) Aufnahmeöffnung für das Bolzenelement auf. Insbesondere weisen die Bremsbeläge jeweils wenigstens eine (zweite) Aufnahmeöffnung für das Stützelement auf. In den einlaufseitigen Abschnitten ist insbesondere jeweils wenigstens eine erste Aufnahmeöffnung ausgebildet. In den auslaufseitigen Abschnitten ist insbesondere jeweils wenigstens eine zweite Aufnahmeöffnung ausgebildet. Insbesondere erstreckt sich das Bolzenelement durch die erste Aufnahmeöffnung. Insbesondere erstreckt sich das Stützelement durch die zweite Aufnahmeöffnung. Insbesondere sind die Aufnahmeöffnungen für das Bolzenelement dazu geeignet und ausgebildet, die (sämtliche) bei einem Bremsvorgang in Umfangsrichtung in Hauptdrehrichtung auftretenden Bremskräfte aufzunehmen und an das Bolzenelement zu übertragen.

Insbesondere weisen die erste und/oder zweite Aufnahmeöffnung einen runden Querschnitt auf. Insbesondere sind die erste und/oder zweite Aufnahmeöffnung zylindrisch ausgebildet. Möglich ist auch, dass die erste und/oder zweite Aufnahmeöffnung einen unrunden Querschnitt aufweisen. Insbesondere sind das Bolzenelement und/oder das Stützelement wenigstens abschnittsweise (zumindest im Bereich ihres Zusammenwirkens mit den Bremsbelägen) zylindrisch ausgebildet.

Der Sattelkörper ist insbesondere einstückig ausgebildet. Insbesondere weist der Sattelkörper wenigstens eine Montagestruktur zur Anbindung an eine Tragstruktur des Fahrrads und insbesondere an einen Rahmen und/oder an eine Gabel auf. Insbesondere ist die Montagestruktur in wenigstens einer der Schenkeleinrichtungen angeordnet.

Der Bremssattel kann wenigstens eine Zuspanneinrichtung umfassen. Insbesondere ist die Zuspanneinrichtung dazu ausgebildet, die Bremsbeläge in einen Eingriff mit der Bremsscheibe zu bringen. Insbesondere umfasst die Zuspanneinrichtung wenigstens eine Bremskolbeneinheit und vorzugsweise wenigstens zwei gegenüberliegende Bremskolbeneinheiten. Die Zuspanneinrichtung kann auch wenigstens vier Bremskolbeneinheiten umfassen, von denen sich jeweils wenigstens zwei Bremskolbeneinheiten gegenüberliegen.

Der Bremssattel ist vorzugsweise als ein Festsattel ausgebildet. Insbesondere ist der Bremssattel dann nicht schwimmend an einer Tragstruktur des Fahrrads und auch nicht schwimmend an einer anderen, an der Tragstruktur des Fahrrads fest montierten Komponente gelagert. Insbesondere ist der Sattelkörper nicht relativ zur Bremsscheibe und/oder zu einer Tragstruktur des Fahrrads verschiebbar gelagert. Insbesondere verschiebt sich der Sattelkörper nicht relativ zur Bremsscheibe und/oder zu einer Tragstruktur des Fahrrads, wenn die Bremse betätigt wird. Insbesondere ist der Sattelkörper ortsfest zur Bremsscheibe und/oder zu einer Tragstruktur des Fahrrads montiert. Insbesondere ist die Montagestruktur des Sattelkörpers nicht schwimmend an einer anderen Komponente gelagert. Es ist aber auch möglich, dass der Bremssattel als Schwimmsattel ausgebildet ist.

Insbesondere dienen die Schwenklagereinrichtung (insbesondere das Bolzenelement) und die Drehmomentabstützung (insbesondere das Stützelement) nicht zur Befestigung des Sattelkörpers an einer Tragstruktur des Fahrrads und/oder an einer anderen an dem Fahrrad montierbaren Komponente. Insbesondere können das Bolzenelement und/oder das Stützelement unabhängig von einer Befestigung des Sattelkörpers an einer Tragstruktur des Fahrrads vom Sattelkörper demontiert werden.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Darstellung eines Mountainbikes mit einer anmeldungsgemäßen Bremsanordnung;
- Fig. 2: eine schematische Darstellung eines Rennrades mit einer anmeldungsgemäßen Bremsanordnung;
- Fig. 3a-d: rein schematische Darstellungen einer Nehmereinheit einer anmeldungsgemäßen Bremsanordnung in verschiedenen perspektivischen Ansichten;
- Fig. 4: eine stark schematisierte Darstellung der Nehmereinheit der Figuren 3a-d in einer geschnittenen Seitenansicht;
- Fig. 5: eine stark schematisierte Darstellung einer Ausgestaltung der Nehmereinheit in einer geschnittenen Seitenansicht;
- Fig. 6: eine stark schematisierte Darstellung einer weiteren Ausgestaltung der Nehmereinheit in einer geschnittenen Seitenansicht;
- Fig. 7: eine stark schematisierte Darstellung einer anderen Ausgestaltung der Nehmereinheit in einer geschnittenen Seitenansicht;
- Fig. 8: eine stark schematisierte Darstellung einer weiteren Ausgestaltung der Nehmereinheit in einer geschnittenen Seitenansicht;
- Fig. 9: eine stark schematisierte Darstellung einer weiteren Ausgestaltung der Nehmereinheit in einer geschnittenen Seitenansicht; und
- Fig. 10: eine stark schematisierte Darstellung einer Nehmereinheit aus dem Stand der Technik in einer geschnittenen Seitenansicht.

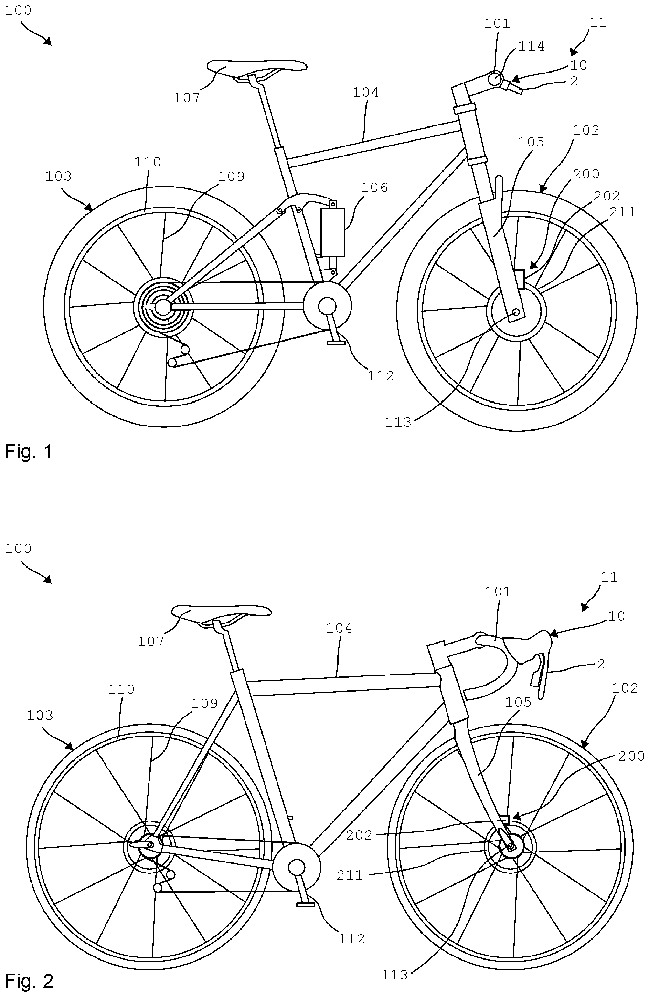

In den Figuren 1 und 2 sind als Mountainbike bzw. Rennrad ausgebildete Fahrräder 100 dargestellt, die jeweils mit einer anmeldungsgemäßen hydraulischen Bremsanordnung 1 ausgerüstet sind. Die Fahrräder 100 verfügen jeweils über ein Vorderrad 102 und ein Hinterrad 103, die über jeweils einen separaten Hydraulikkreis 11 einzeln gebremst werden können. Dazu umfassen die Hydraulikkreise 11 jeweils eine Gebereinheit 10 und eine Nehmereinheit 200.

Ein Fahrrad 100 verfügt über einen Rahmen 104, einen Lenker 101 mit Griffen 114, einen Sattel 107, eine Gabel bzw. Federgabel 105 und im Falle des Mountainbikes kann ein Hinterraddämpfer 106 vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Naben der Räder 102, 103 können jeweils über ein Spannsystem 113 (zum Beispiel eine Steckachse oder einen Schnellspanner) an dem Rahmen 104 bzw. der Gabel 105 befestigt sein.

An dem Rahmen 104 und an der Gabel 105 ist jeweils eine hier als hydraulische Scheibenbremse ausgebildete Nehmereinheit 200 mit einem Bremssattel 202 und einer Bremsscheibe 211 befestigt. Die Nehmereinheit 200 ist über eine hier nicht sichtbare Leitungseinrichtung 201 mit der zugehörigen Gebereinheit 10 verbunden, sodass sich ein geschlossener Hydraulikkreis 11 ergibt. Die Gebereinheiten 10 eines Fahrrads 100 sind an gegenüberliegenden Enden des Lenkers 101 montiert und weisen jeweils einen mit den Fingern betätigbaren Bremshebel 2 auf. Bei dem Rennrad 100 ist die Gebereinheit 10 als eine Schalt-Brems-Kombination ausgebildet.

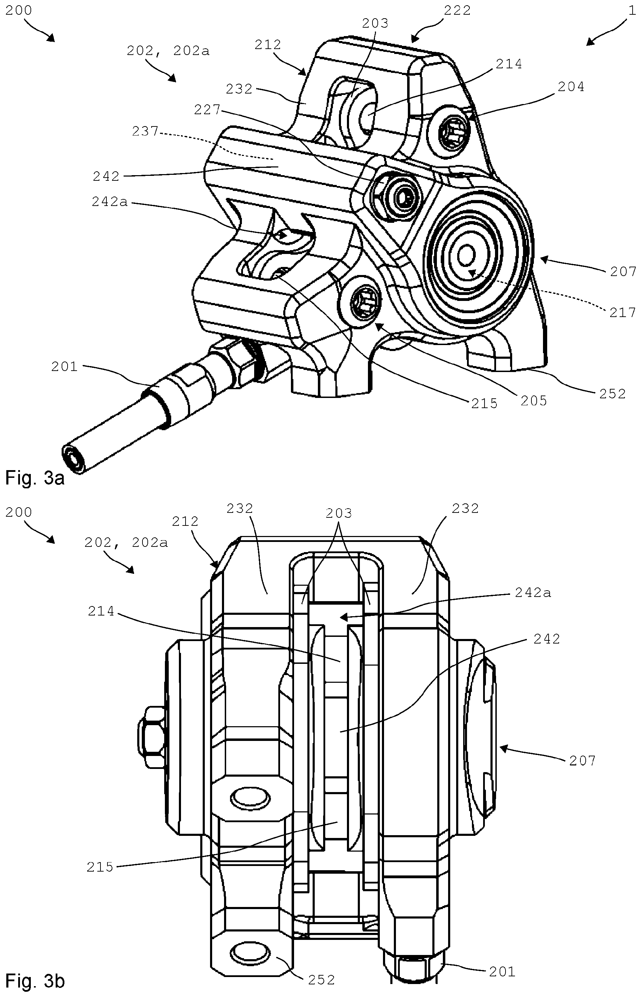

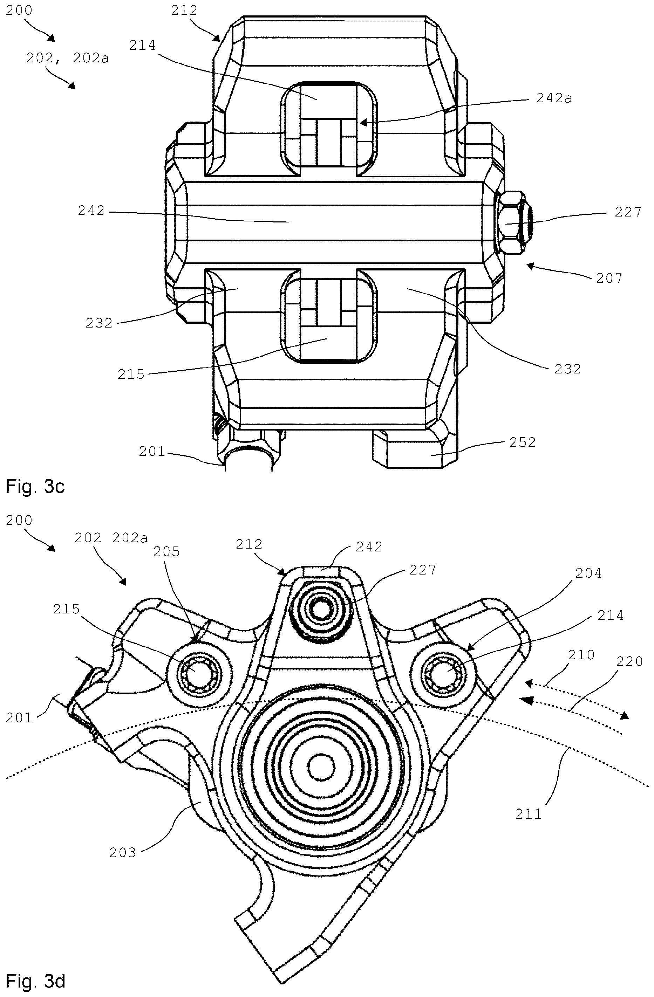

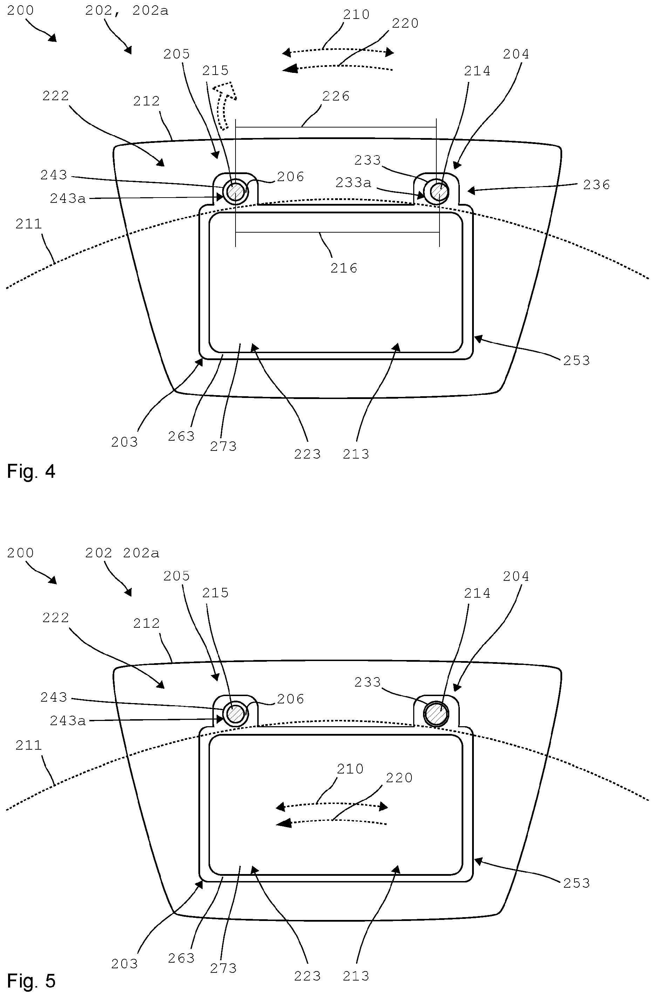

Eine anmeldungsgemäße Bremsanordnung 1 wird nun mit Bezug zu den verschiedenen Ansichten der Figuren 3a bis 3d und der geschnittenen Seitenansicht der Figur 4 näher beschrieben.

Die Nehmereinheit 200 umfasst einen als Festsattel 202a ausgebildeten Bremssattel 202 mit einem Sattelkörper 212 und zwei Bremsbelägen 203. Von den Bremsbelägen 203 ist hier nur einer sichtbar. Über eine hier nur teilweise dargestellte Leitungseinrichtung 201 kann der Bremssattel 202 mit der Gebereinheit 10 verbunden werden. Die Bremsbeläge 203 werden über eine besonders vorteilhaft ausgebildete Aufnahmeeinrichtung 222 am Sattelkörper 212 angebunden. Die Bremsbeläge 203 sind axial verschiebbar an der Aufnahmeeinrichtung 222 gelagert. Mittels einer Montagestruktur 252 und beispielsweise zweier Gewindebohrungen kann der Sattelkörper 212 an dem Rahmen 104 oder der Gabel 105 montiert werden.

Die Bremsbeläge 203 weisen jeweils einen Tragkörper 263 und einen darauf angeordneten Belagkörper 237 auf. Die Bremsbeläge 203 für den hier gezeigten Bremssattel 202 sind als Gleichteile 253 ausgebildet und können wahlweise auf einer axialen Seite der Bremsscheibe 211 in den Bremssattel 202 eingebaut werden. Die Bremsbeläge 203 weisen jeweils einen einlaufseitigen Abschnitt 213 und einen auslaufseitigen Abschnitt 223 auf (vergleiche Figur 4). Wenn sich die Bremsscheibe 211 in Hauptdrehrichtung 220 dreht, läuft sie einlaufseitig in den Bremssattel 202 ein und auslaufseitig aus dem Bremssattel 202 wieder hinaus.

Der Sattelkörper 212 wird hier durch zwei gegenüberliegende Schenkeleinrichtungen 232 und eine die Schenkeleinrichtungen 232 verbindende Gehäusebrückeneinrichtung 242 gebildet. In der Gehäusebrückeneinrichtung 242 sind hier zwei Aussparungen 242a ausgebildet. Der Sattelkörper 212 übergreift eine in der Figur 3d skizzierte Bremsscheibe 211, sodass die Schenkeleinrichtungen 232 axial neben der Bremsscheibe 211 angeordnet sind. Die Bremsscheibe 211 dreht sich bei Vorwärtsfahrt des Fahrrads 100 in eine Hauptdrehrichtung 220. Zudem definieren der für die Bremsscheibe 211 bereitgestellte Raum des Sattelkörpers 212 bzw. die Bremsscheibe 211 eine Umfangsrichtung 210.

Um die Bremsbeläge 203 in einen Eingriff mit der Bremsscheibe 211 zu bringen, ist der Bremssattel 202 mit einer Zuspanneinrichtung 207 ausgestattet. Die Zuspanneinrichtung 207 umfasst hier zwei Bremskolbeneinheiten 217, die (nicht sichtbar hinter einer Abdeckung) in den Schenkeleinrichtungen 232 untergebracht sind. Die Bremskolbeneinheiten 217 sind durch einen Fluidkanal 237 miteinander verbunden. Der Fluidkanal 237 erstreckt sich hier nicht sichtbar innerhalb der Gehäusebrückeneinrichtung 242. Zur Entlüftung ist eine Entlüftungseinheit 227 vorgesehen, beispielsweise eine in die Gehäusebrückeneinrichtung 242 geschraubte Entlüftungsschraube.

Bei einem Bremsvorgang werden die Bremsbeläge 203 mittels der Bremskolbeneinheiten 217 gegen die Bremsscheibe 211 gepresst. Durch den Kontakt mit der Bremsscheibe 211 erfahren die Bremsbeläge 203 eine Kraft in Umfangsrichtung 210 in die Hauptdrehrichtung 220. Um diese Kraft optimal aufzufangen, ist die Aufnahmeeinrichtung 222 mit einer Schwenklagereinrichtung 204 mit einem Bolzenelement 214 ausgestattet. Beim Bremsen werden die an dem Bolzenelement 214 hängenden Tragkörper 263 der Bremsbeläge 203 auf Zug und nicht auf Druck belastet.

Die einlaufseitigen Abschnitte 213 sind schwenkbar an der Schwenklagereinrichtung 204 angebunden. Dazu erstreckt sich das Bolzenelement 214 durch jeweils eine erste Aufnahmeöffnung 233 in den einlaufseitigen Abschnitten 213. Das Bolzenelement 214 ist am Sattelkörper 212 verschraubt und verbindet die beiden Schenkeleinrichtungen 232 in tragender Weise miteinander.

Durch den Kontakt mit der in Hauptdrehrichtung 220 rotierenden Bremsscheibe 211 werden die einlaufseitigen Abschnitte 213 und die Schwenklagereinrichtung 204 auf Zug belastet. Zudem erfahren die auslaufseitigen Abschnitte 223 eine Schwenkbewegung nach radial außen. Um diese Schwenkbewegung gezielt zu blockieren, ist eine Drehmomentabstützung 205 mit einem Stützelement 215 vorgesehen. Das Stützelement 215 erstreckt sich durch jeweils eine zweite Aufnahmeöffnung 243 in den auslaufseitigen Abschnitten 223. Dadurch wird die Schwenkbewegung ab einem bestimmten Schwenkwinkel formschlüssig blockiert. Beispielsweise können sich die Bremsbeläge einen Grad oder einige wenige Grad bewegen, bevor sie an der Drehmomentabstützung 205 anliegen. Die Schwenkbewegung nach radial außen ist in der Figur 4 durch einen gestrichelten Blockpfeil skizziert.

In der Figur 4 ist besonders gut zu erkennen, dass die Schenkeleinrichtung 232 oder die Gehäusebrückeneinrichtung 242 keinerlei Strukturen aufweisen, an welchen die Bremsbeläge 203 bei einem Bremsvorgang in der Art und Weise einer Stützwand abgestützt werden könnten.

Korrespondierend zu den Bremsbelägen 203 sind hier auch das Bolzenelement 214 und das Stützelement 215 als Gleichteile 236 ausgebildet. Dadurch können das Bolzenelement 214 und das Stützelement 215 beliebig gegeneinander ausgetauscht und am Sattelkörper 212 montiert werden. Durch die Verwendung der Gleichteile 236, 253 können hier die Funktionen der Schwenklagereinrichtung 204 und der Drehmomentabstützung 205 gegeneinander ausgetauscht werden. Das kommt beispielsweise bei einer Rückwärtsfahrt vor, wenn sich die Bremsscheibe 211 entgegen der Hauptdrehrichtung 220 dreht. Das kann auch dann vorkommen, wenn der Bremssattel 202 um 180° gewendet am Fahrrad 100 montiert wird. Ein Vorteil der Gleichteile 236, 253 ist, dass der Bremssattel 202 und die Bremsbeläge 203 unabhängig von der Vorwärtsfahrtrichtung an einem Fahrrad 100 montiert werden können.

Um die in Umfangsrichtung 210 in Hauptdrehrichtung 220 wirkenden Bremskräfte mit der Schwenklagereinrichtung 204 als Zugkräfte abfangen zu können, ist eine definierte Beabstandung 206 vorgesehen. Diese Beabstandung 206 ist in Umfangsrichtung in Hauptdrehrichtung 220 zwischen den auslaufseitigen Abschnitten 223 und der Drehmomentabstützung 205 sowie dem Sattelkörper 212 und allen übrigen Bauteilen ausgebildet. Durch die Beabstandung 206 können die auslaufseitigen Abschnitte 223 bei einem Bremsvorgang nirgendwo in Umfangsrichtung 210 in die Hauptdrehrichtung 220 abgestützt werden. Die auslaufseitigen Abschnitte 223 werden lediglich nach radial außen abgestützt, um die Schwenkbewegung zu blockieren. Die Beabstandung 206 ist hier so ausgebildet, dass sie bei allen bestimmungsgemäß vorgesehenen Bremsvorgängen aufrechterhalten wird. Dabei sind die in der Figur 4 gezeigten Dimensionen zur besseren Veranschaulichung nicht maßstabsgetreu.

Um die Beabstandung 206 zusammen mit dem Konzept der Gleichteile 236, 253 umzusetzen, sind die Aufnahmeöffnungen 233, 243 und das Bolzenelement 214 sowie das Stützelement 215 in einer aufeinander abgestimmten Anordnung ausgebildet. Die erste Aufnahmeöffnung 233 weist ein definiertes Übermaß 233a zum Bolzenelement 214 auf. Die zweite Aufnahmeöffnung 243 weist ein definiertes Übermaß 243a zum Stützelement 215 auf. Dazu sind beispielsweise die Durchmesser der Aufnahmeöffnungen 233, 243 um einen definierten Faktor größer als die Außendurchmesser des Bolzenelements 214 bzw. des Stützelements 115.

Das Bolzenelement 214 und das Stützelement 215 weisen hier den Abstand 216 zueinander auf (in Bezug auf ihre Längsachsen). Die Aufnahmeöffnungen 233, 243 weisen den Abstand 226 zueinander auf (in Bezug auf ihre Längsachsen). Dabei ist der Abstand 216 größer als der Abstand 226. Dadurch ergibt sich die hier nicht maßstabsgetreu dargestellte exzentrische Anordnung des Bolzenelements 214 relativ zur Aufnahmeöffnung 233. Durch die Wahl der Abstände 216, 226 wird gewährleistet, dass die Beabstandung 206 auch dann vorhanden ist, wenn die Bremsbeläge 203 mit ihren Aufnahmeöffnungen 233 berührend an dem Bolzenelement 214 anliegen. Dadurch wird beim Bremsen nur das Bolzenelement 214 in Umfangsrichtung 210 belastet, nicht aber das Stützelement 215.

Auf eine große, den Sattelkörper 212 in der Regel erheblich schwächende Entnahmeöffnung für die Bremsbeläge 203 an einer radialen Oberseite des Sattelkörpers 212 wurde hier verzichtet. Da keine Stützwände nötig sind, können die Bremsbeläge 203 beispielsweise bequem in Umfangsrichtung 210 entnommen werden.

Die Figur 5 zeigt eine Ausgestaltung der Bremsanordnung 1, bei welcher das Bolzenelement 214 und das Stützelement 215 nicht als Gleichteile ausgebildet sind. Beispielsweise ist das Bolzenelement 214 mit einem größeren Durchmesser als das Stützelement 215 ausgestattet. Die Bremsbeläge 203 und die übrigen Komponenten des Bremssattels 202 sind hier beispielsweise wie mit Bezug zu der Figur 4 beschrieben ausgebildet. Die Abstände 216 und 226 sind hier gleich. Das Bolzenelement 214 ist hier so dimensioniert, dass es mit einem geringeren Spiel in der Aufnahmeöffnung 233 aufgenommen ist, als das Stützelement 215 in der Aufnahmeöffnung 243. Durch den angepassten Durchmesser des Bolzenelements 214 wird gewährleistet, dass die Beabstandung 206 auch dann besteht, wenn die Bremsbeläge 203 beim Bremsen berührend am Bolzenelement 214 Anliegen. Die Bremsbeläge 203 sind hier als Gleichteile 253 ausgebildet.

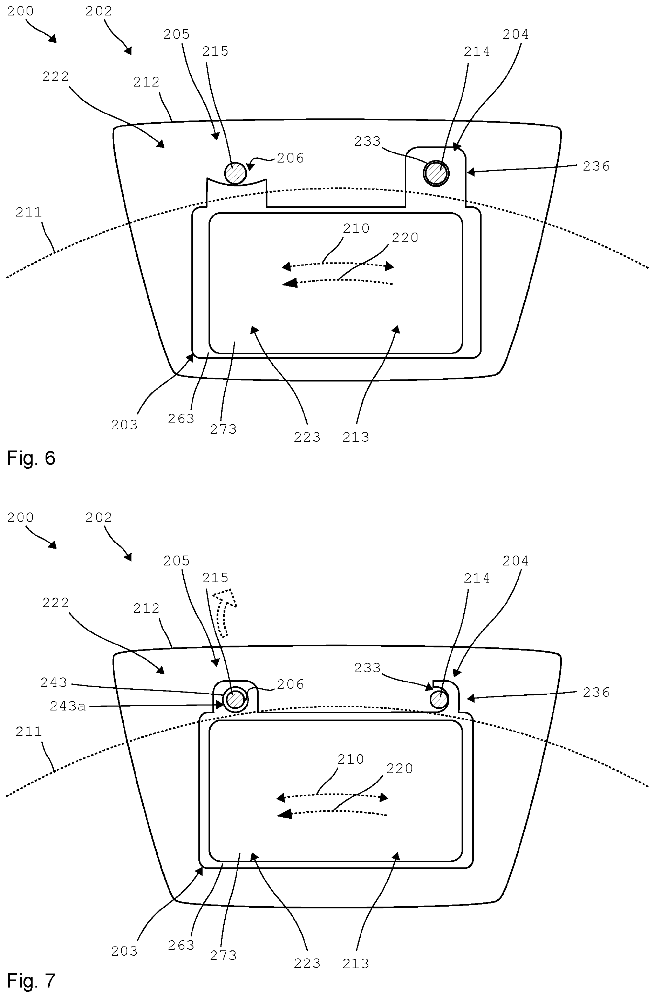

In der Figur 6 ist eine Ausgestaltung der Bremsanordnung 1 gezeigt, bei welcher die zweiten Aufnahmeöffnungen 243 umfänglich offen ausgebildet sind. Dadurch liegen die auslaufseitigen Abschnitte 223 beispielsweise entlang ihrer Außenkante an dem Stützelement 215 an. Auch das ermöglicht eine vorteilhafte formschlüssige Blockierung der Schwenkbewegung nach radial außen. Zudem kann dadurch die definierte Beabstandung 206 zuverlässig gewährleistet werden. Das Bolzenelement 214 und das Stützelement 215 sind hier beispielsweise als Gleichteile 236 ausgebildet.

Bei dieser Ausführung ist besonders gut zu erkennen, dass die Drehmomentabstützung 205 der erfindungsgemäßen Bremsanordnung 1 keine in Umfangsrichtung wirkenden Bremskräfte aufnehmen kann. Hier ist auch gut zu erkennen, dass die in Umfangsrichtung wirkenden Bremskräfte allein von der Schwenklagereinrichtung 204 aufgenommen und in den Sattelkörper 212 weitergeleitet werden.

In der Figur 7 ist eine Variante der Bremsanordnung 1 nach Figur 4 gezeigt, bei welcher die ersten Aufnahmeöffnungen 233 umfänglich offen und hier beispielhaft hakenförmig ausgebildet sind. Das Bolzenelement 214 und das Stützelement 215 sind hier beispielsweise als Gleichteile 236 ausgebildet. Es können auch Ausführungen vorgesehen sein, bei denen sowohl die ersten als auch die zweiten Aufnahmeöffnungen 233, 243 umfänglich offen ausgebildet sind. Dabei ist möglich, dass die ersten und zweiten Aufnahmeöffnungen 233, 243 gleichartig ausgebildet sind, sodass die Bremsbeläge 203 Gleichteile 253 sind.

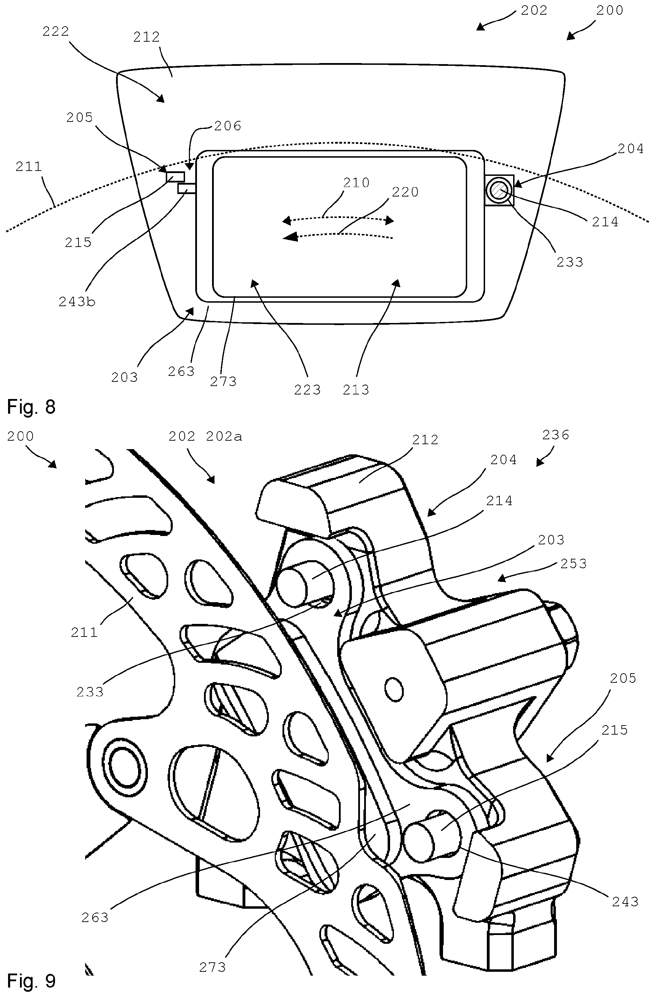

Die Figur 8 zeigt eine Variante der Bremsanordnung 1, bei welcher für die wenigstens zwei Bremsbeläge 203 jeweils ein Bolzenelement 214 und jeweils ein Stützelement 215 vorgesehen sind. Die Bolzenelemente 214 und die Stützelemente 215 liegen hier innerhalb des Radius der aufgenommenen Bremsscheibe 211 und sind somit axial neben der Bremsscheibe 211 angeordnet.

Die Bolzenelemente 214 können hier z. B. als jeweils eine zylindrische Nase am Sattelkörper 212 oder als ein Schraubelement oder dergleichen ausgebildet sein. Um ein Herunterspringen der Bremsbeläge 203 von den Bolzenelementen 214 zu verhindern, kann ein Splint oder Stift oder auch ein Schraubenkopf oder dergleichen vorgesehen sein. An den Bremsbelägen 203 befinden sich hier Aufnahmeöffnungen 233, welche mit den Bolzenelementen 214 korrespondieren.

Die Stützelemente 215 sind hier z. B. als jeweils ein am Sattelkörper 212 ausgebildeter Vorsprung oder dergleichen ausgebildet. An den Bremsbelägen 203 befinden sich mit den Stützelementen 215 korrespondierende Abstützteile 243b, welche hier den zweiten Aufnahmeöffnungen 243 entsprechen.

Die hier vorgestellte Positionierung der Bolzenelemente 214 und Stützelemente 215 axial neben der Bremsscheibe 211 kann vorteilhafterweise auch mit den zuvor gezeigten Ausführungen kombiniert werden. Beispielsweise können die in der Fig. 4 oder 5 gezeigten Bolzenelemente 214 und Stützelemente 215 bzw. die ersten und zweiten Aufnahmeöffnungen 233, 243 axial neben der Bremsscheibe 211 angeordnet werden. Da sich die Bolzenelemente 214 und Stützelemente 215 nicht durch die Bremsscheibe 211 hindurch erstrecken können, müssen sie auf jeder axialen Seite der Bremsscheibe 211 separat ausgeführt werden. Zum Beispiel sind dann an jeweils einer Schenkeleinrichtung 232 ein Bolzenelement 214 und ein Stützelement 215 befestigt. Vorteilhafterweise können die Bolzenelemente 214 und Stützelemente 215 als Gleichteile 236 und/oder die Bremsbeläge 203 als Gleichteile 253 umgesetzt werden.

In der Figur 9 ist die mit Bezug zu den Figuren 3a bis 3d vorgestellte Bremsanordnung 1 in einer geschnittenen Ansicht gezeigt, sodass hier die noch einmal die spezielle Anbindung der Bremsbeläge 203 an den Sattelkörper 212 besonders gut zu erkennen ist. Die Aufnahmeeinrichtung 222 ist hier im Wesentlichen so wie in der Figur 4 beschrieben ausgebildet.

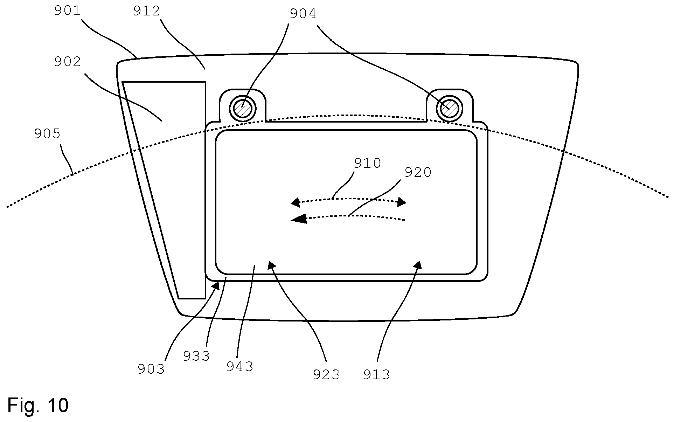

Zur Veranschaulichung der Vorteile der vorliegenden Erfindung ist in der Figur 10 ein Bremssattel 901 aus dem Stand der Technik gezeigt. Der Bremssattel 901 weist einen Sattelkörper 912 und eine an dem Sattelkörper 912 ausgebildete Stützwand 902 auf. Die Bremsbeläge 903 weisen einen einlaufseitigen Abschnitt 913 und einen auslaufseitigen Abschnitt 923 sowie einen Tragkörper 933 und einen Belagkörper 943 auf.

Bei einem Bremsvorgang werden die Bremsbeläge 903 von der Bremsscheibe 905 in Umfangsrichtung 910 in die Hauptdrehrichtung 920 mitgerissen, bis sie auf die jeweilige Stützwand 902 treffen. Dadurch werden die auslaufseitigen Abschnitte 923 auf Druck belastet. Der einlaufseitige Abschnitt 913 wird in Hauptdrehrichtung 920 gegen den auslaufseitigen Abschnitt 923 gedrückt, sodass der Bremsbelag 903 gestaucht wird. Dadurch kommt es häufig zu unerwünschten Geräuschemissionen und zu einer eher ungünstigen Belastung der Bremsbeläge 903 sowie des Bremssattels 901.

Die Bremsbeläge 903 sind hier mittels Haltestiften 904 gegen ein Herausspringen aus dem Bremssattel 901 gesichert. Die Haltestifte 904 sind hier so dimensioniert und relativ zur Stützwand 902 angeordnet, dass sie keine wirksame Aufnahme von Bremskräften bereitstellen können.

Hier ist gut zu erkennen, dass aufgrund der in Fahrtrichtung vor den Bremsbelägen 903 liegenden Stützwänden 902 eine Abschirmung des Fahrtwindes erfolgt. Im Gegensatz dazu kann bei der vorliegenden Erfindung auf die Stützwand 902 verzichtet werden, sodass eine erheblich wirksamere Kühlung der Bremsbeläge 903 möglich ist.

**Bezugszeichenliste:**

| | | | |
|---|---|---|---|
| 1 | Bremsanordnung | 223 | Hälfte |
| 2 | Bremshebel | 226 | Abstand |
| 10 | Gebereinheit | 227 | Entlüftungseinheit |
| 100 | Fahrrad | 232 | Schenkeleinrichtung |
| 101 | Lenker | 233 | Aufnahmeöffnung |
| 102 | Rad, Vorderrad | 233a | Übermaß |
| 103 | Rad, Hinterrad | 236 | Gleichteil |
| 104 | Rahmen | 237 | Fluidkanal |
| 105 | Gabel, Federgabel | 242 | Gehäusebrückeneinrichtung |
| 106 | Hinterraddämpfer | 242a | Aussparung |
| 107 | Sattel | 243 | Aufnahmeöffnung |
| 109 | Speiche | 243a | Übermaß |
| 110 | Felge | 243b | Abstützteil |
| 112 | Tretkurbel | 252 | Montagestruktur |
| 113 | Spannsystem | 253 | Gleichteil |
| 114 | Griff | 263 | Tragkörper |
| 200 | Nehmereinheit | 273 | Belagkörper |
| 201 | Leitungseinrichtung | 901 | Bremssattel |
| 202 | Bremssattel | 902 | Stützwand |
| 202a | Festsattel | 903 | Bremsbelag |
| 203 | Bremsbelag | 904 | Haltestift |
| 204 | Schwenklagereinrichtung | 905 | Bremsscheibe |
| 205 | Drehmomentabstützung | 910 | Umfangsrichtung |
| 206 | Beabstandung | 912 | Sattelkörper |
| 207 | Zuspanneinrichtung | 913 | Hälfte |
| 210 | Umfangsrichtung | 920 | Hauptdrehrichtung |
| 211 | Bremsscheibe | 923 | Hälfte |
| 212 | Sattelkörper | 933 | Tragkörper |
| 213 | Hälfte | 943 | Belagkörper |
| 214 | Bolzenelement | | |
| 215 | Stützelement | | |
| 216 | Abstand | | |
| 217 | Bremskolbeneinheit | | |
| 220 | Hauptdrehrichtung | | |
| 222 | Aufnahmeeinrichtung | | |

## Patentansprüche

1. Hydraulische Bremsanordnung (1) für ein wenigstens teilweise muskelbetriebenes Fahrrad (100), umfassend wenigstens eine mit einer Gebereinheit (10) fluidisch verbindbare Nehmereinheit (200) mit wenigstens einem als Festsattel (202a) ausgebildeten Bremssattel (202) und mit wenigstens zwei Bremsbelägen (203) mit jeweils einem einlaufseitigen und einem auslaufseitigen Abschnitt (213, 223), in einer Hauptdrehrichtung einer Bremsscheibe (211) gesehen,
wobei der Bremssattel (202) einen Sattelkörper (212), welcher wenigstens die Bremsscheibe (211) übergreift, und eine Aufnahmeeinrichtung (222) zur Anbindung der Bremsbeläge (203) an den Sattelkörper (212) umfasst,
wobei der Sattelkörper (212) zwei Schenkeleinrichtungen (232) und eine die Schenkeleinrichtungen (232) verbindende Gehäusebrückeneinrichtung (242) umfasst,
**dadurch gekennzeichnet,**
**dass** die Aufnahmeeinrichtung (222) wenigstens eine Schwenklagereinrichtung (204) und wenigstens eine Drehmomentabstützung (205) umfasst
und **dass** die Schwenklagereinrichtung (204) wenigstens ein an beiden Schenkeleinrichtungen (232) fest montiertes Bolzenelement (214) umfasst
und **dass** die einlaufseitigen Abschnitte (213) der Bremsbeläge (203) schwenkbar an der Schwenklagereinrichtung (204) angebunden sind und dass mit der Drehmomentabstützung (205) eine Schwenkbewegung der Bremsbeläge (203) nach radial außen formschlüssig blockierbar ist und dass die auslaufseitigen Abschnitte (223) der Bremsbeläge (203) wenigstens in Umfangsrichtung (210) in die Hauptdrehrichtung (220) mit einer definierten Beabstandung (206) zur Aufnahmeeinrichtung (222) und zum Sattelkörper (212) angeordnet sind, sodass die auslaufseitigen Abschnitte (223) der Bremsbeläge (203) bei einem Bremsvorgang nicht in Umfangsrichtung (210) in die Hauptdrehrichtung (220) abstützbar sind.

2. Bremsanordnung (1) nach dem vorhergehenden Anspruch, wobei die bei einem Bremsvorgang in Umfangsrichtung (210) auftretenden Bremskräfte nur über die einlaufseitigen Abschnitte (213) der Bremsbeläge (203) an den Bremssattel (202) weitergegeben werden und wobei die bei einem Bremsvorgang in Umfangsrichtung (210) auftretenden Bremskräfte nur von der Schwenklagereinrichtung (204) aufnehmbar sind.

3. Bremsanordnung (1) nach einem vorhergehenden Ansprüche, wobei sich das Bolzenelement (214) durch die einlaufseitigen Abschnitte (213) der Bremsbeläge (203) erstreckt und wobei die Bremsbeläge (203) dazu jeweils wenigstens eine erste Aufnahmeöffnung (233) aufweisen und wobei das Bolzenelement (214) am Sattelkörper (212) befestigt und vorzugsweise verschraubt ist und wobei das Bolzenelement (214) vom Sattelkörper (212) gelöst werden muss, um die Bremsbeläge (203) entnehmen zu können.

4. Bremsanordnung (1) nach einem der vorhergehenden Ansprüche, wobei die Drehmomentabstützung (205) wenigstens ein Stützelement (215) umfasst und wobei die auslaufseitigen Abschnitte (223) wenigstens nach radial außen an dem Stützelement (215) abstützbar sind und wobei das Stützelement (215) lösbar am Sattelkörper (212) befestigt und vorzugsweise verschraubt ist.

5. Bremsanordnung (1) nach dem vorhergehenden Anspruch, wobei ein gemeinsames Stützelement (215) für die wenigstens zwei Bremsbeläge (203) vorgesehen ist und wobei sich das Stützelement (215) durch die auslaufseitigen Abschnitte (223) der Bremsbeläge (203) erstreckt und wobei die Bremsbeläge (203) dazu jeweils wenigstens eine zweite Aufnahmeöffnung (243) aufweisen und wobei das Stützelement (215) vom Sattelkörper (212) gelöst werden muss, um die Bremsbeläge (203) entnehmen zu können.

6. Bremsanordnung (1) nach dem vorhergehenden Anspruch, wobei wenigstens die zweiten Aufnahmeöffnungen (243) ein Übermaß (243a) zum Stützelement (215) aufweisen und wobei das Übermaß (243a) so bemessen ist, dass die auslaufseitigen Abschnitte (223) bei einem Bremsvorgang nicht in Umfangsrichtung (210) der Hauptdrehrichtung (220) an dem Stützelement (215) abstützbar sind.

7. Bremsanordnung (1) nach Anspruch 6, wobei die ersten und zweiten Aufnahmeöffnungen (233, 243) das gleiche Übermaß (243a) zum Stützelement (215) aufweisen.

8. Bremsanordnung (1) nach einem der Ansprüche 5-7, wobei wenigstens das Bolzenelement (214) exzentrisch durch die ersten Aufnahmeöffnungen (233) und/oder wenigstens das Stützelement (215) exzentrisch durch die zweiten Aufnahmeöffnungen (243) verläuft.

9. Bremsanordnung (1) nach einem der Ansprüche 5-8, wobei das Stützelement (215) und das Bolzenelement (214) einen ersten Abstand (216) zueinander aufweisen und wobei die ersten und zweiten Aufnahmeöffnungen (233, 243) jeweils eines Bremsbelags (203) einen zweiten Abstand (226) zueinander aufweisen und wobei der erste Abstand (216) größer als der zweite Abstand (226) ist.

10. Bremsanordnung (1) nach einem der vorhergehenden Ansprüche, wobei die Schwenklagereinrichtung (204) und die Drehmomentabstützung (205) gleichartig ausgebildet sind, sodass bei einer der Hauptdrehrichtung (220) entgegengesetzten Drehrichtung die Drehmomentabstützung (205) als Schwenklagereinrichtung (204) und die Schwenklagereinrichtung (204) als Drehmomentabstützung (205) einsetzbar ist.

11. Bremsanordnung (1) nach einem der vorhergehenden Ansprüche, wobei die Bremsbeläge (203) wenigstens in Bezug auf ihre Anbindung an die Schwenklagereinrichtung (204) und die Drehmomentabstützung (205) als Gleichteile (253) ausgebildet

12. Bremsanordnung (1) nach einem der Ansprüche 4-11, und wobei das Bolzenelement (214) und/oder das Stützelement (215) die Schenkeleinrichtungen (232) miteinander verbinden und an wenigstens einer der Schenkeleinrichtungen (232) befestigt sind.

13. Bremsanordnung (1) nach dem vorhergehenden Anspruch, wobei keine der Schenkeleinrichtungen (232) eine Struktur aufweist, welche axial neben der Bremsscheibe (211) und in Umfangsrichtung (210) vor den Bremsbelägen (203) verläuft und an welcher die Bremsbeläge (203) bei einem Bremsvorgang abgestützt werden könnten.

14. Bremsanordnung (1) nach dem vorhergehenden Anspruch, wobei die Gehäusebrückeneinrichtung (242) wenigstens zwei von radial außen zugängliche Aussparungen (242a) umschließt und wobei das Bolzenelement (214) und das Stützelement (215) unterhalb jeweils einer Aussparung (242a) verlaufen.

## Claims

1. Hydraulic brake assembly (1) for an at least partially human-powered bicycle (100), comprising at least one receiver unit (200) which can be fluidically connected to a transmitter unit (10) and having at least one brake caliper (202) designed as a fixed caliper (202a) and having at least two brake pads (203) with respectively one inlet-side and one outlet-side section (213, 223), as viewed in a main direction of rotation of a brake disc (211), wherein the brake caliper (202) comprises a caliper body (212), which engages over at least the brake disc (211), and a receiving device (222) for connecting the brake pads (203) to the caliper body (212), wherein the caliper body (212) comprises two leg devices (232) and a housing bridge device (242) connecting the leg devices (232), **characterised in that** the receiving device (222) comprises at least one pivot bearing device (204) and at least one torque support (205) and **in that** the pivot bearing device (204) comprises at least one bolt element (214) fixedly mounted on both leg devices (232) and **in that** the inlet-side sections (213) of the brake pads (203) are pivotably connected to the pivot bearing device (204) and **in that** a pivot movement of the brake pads (203) radially outwards can be positively blocked with the torque support (205) and **in that** the outlet-side sections (223) of the brake pads (203) are arranged, at least in the circumferential direction (210) in the main direction of rotation (220), with a defined spacing (206) relative to the receiving device (222) and the caliper body (212) such that the outlet-side sections (223) of the brake pads (203) cannot be supported in the circumferential direction (210) in the main direction of rotation (220) during a braking operation.

2. Brake assembly (1) according to the preceding claim, wherein the braking forces that occur during a braking operation in the circumferential direction (210) are only transmitted to the brake caliper (202) via the inlet-side sections (213) of the brake pads (203) and wherein the braking forces that occur during a braking operation in the circumferential direction (210) can only be absorbed by the pivot bearing device (204).

3. Brake assembly (1) according to one of the preceding claims, wherein the bolt element (214) extends through the inlet-side sections (213) of the brake pads (203) and wherein the brake pads (203) respectively have at least one first receiving opening (233) and wherein the bolt element (214) is fastened and preferably screwed to the caliper body (212) and wherein the bolt element (214) has to be detached from the caliper body (212) in order to be able to remove the brake pads (203).

4. Brake assembly (1) according to one of the preceding claims, wherein the torque support (205) comprises at least one supporting element (215) and wherein the outlet-side sections (223) can be supported at least radially outwardly on the supporting element (215) and wherein the supporting element (215) is releasably fastened and preferably screwed to the caliper body (212).

5. Brake assembly (1) according to the preceding claim, wherein a common supporting element (215) is provided for the at least two brake pads (203) and wherein the supporting element (215) extends through the outlet-side sections (223) of the brake pads (203) and wherein the brake pads (203) respectively have at least one second receiving opening (243) and wherein the supporting element (215) has to be detached from the caliper body (212) in order to be able to remove the brake pads (203).

6. Brake assembly (1) according to the preceding claim, wherein at least the second receiving openings (243) have an oversize (243a) relative to the supporting element (215) and wherein the oversize (243a) is dimensioned such that the outlet-side sections (223) cannot be supported on the supporting element (215) in the circumferential direction (210) of the main direction of rotation (220) during a braking operation.

7. Brake assembly (1) according to Claim 6, wherein the first and second receiving openings (233, 243) have the same oversize (243a) relative to the supporting element (215).

8. Brake assembly (1) according to one of Claims 5-7, wherein at least the bolt element (214) runs eccentrically through the first receiving openings (233) and/or at least the supporting element (215) runs eccentrically through the second receiving openings (243).

9. Brake assembly (1) according to one of Claims 5-8, wherein the supporting element (215) and the bolt element (214) have a first distance (216) from one another and wherein the first and second receiving openings (233, 243) of a respective brake pad (203) have a second distance (226) from one another and wherein the first distance (216) is larger than the second distance (226).

10. Brake assembly (1) according to one of the preceding claims, wherein the pivot bearing device (204) and the torque support (205) are designed in the same manner such that in a direction of rotation opposite the main direction of rotation (220), the torque support (205) can be used as the pivot bearing device (204) and the pivot bearing device (204) can be used as the torque support (205).

11. Brake assembly (1) according to one of the preceding claims, wherein the brake pads (203) are designed as identical parts (253) at least with regard to their connection to the pivot bearing device (204) and the torque support (205).

12. Brake assembly (1) according to one of Claims 4-11, and wherein the bolt element (214) and/or the supporting element (215) connect the leg devices (232) to one another and are attached to at least one of the leg devices (232).

13. Brake assembly (1) according to the preceding claim, wherein neither of the leg devices (232) has a structure which runs axially alongside the brake disc (211) and in the circumferential direction (210) upstream of the brake pads (203) and on which the brake pads (203) could be supported during a braking operation.

14. Brake assembly (1) according to the preceding claim, wherein the housing bridge device (242) surrounds at least two radially outwardly accessible recesses (242a) and wherein the bolt element (214) and the supporting element (215) run below a respective recess (242a).

## Revendications

1. Agencement de freinage (1) hydraulique, destiné à une bicyclette (100), actionnée au moins en partie par force musculaire, comprenant au moins une unité réceptrice (200) susceptible d'être fluidiquement reliée avec une unité émettrice (10), doté d'au moins un étrier de frein (202) conçu sous la forme d'un étrier fixe (202a) et doté d'au moins deux plaquettes de frein (203) comprenant chacune un segment (213, 223) du côté entrée et côté sortie, considérés dans une direction de rotation principale d'un disque de frein (211), l'étrier de frein (202) comprenant un corps d'étrier (212), lequel chevauche au moins le disque de frein (211) et un système de logement (222), destiné à raccorder les plaquettes de frein (203) sur le corps d'étrier (212),
le corps d'étrier (212) comprenant deux systèmes de branche (232) et un système de pont de boîtier (242) reliant les systèmes de branche (232),
**caractérisé en ce que**
le système de logement (222) comprend au moins un système de palier de pivotement (204) et au moins un support de couple (205)
et **en ce que** le système de palier de pivotement (204) comprend au moins un élément formant boulon (214), monté de manière fixe sur les deux systèmes de branche (232) et **en ce que** les segments (213) du côté entrée des plaquettes de frein (203) sont raccordés de manière pivotante sur le système de palier de pivotement (204) et **en ce qu'**à l'aide du support de couple (205), un déplacement en pivotement des plaquettes de frein (203) vers l'extérieur en direction radiale est susceptible d'être bloqué par complémentarité de forme et **en ce que** les segments (223) du côté sortie des plaquettes de frein (203) sont placés au moins en direction périphérique (210) dans la direction de rotation principale (220) avec un écartement (206) défini par rapport au système de logement (222) et au corps d'étrier (212), de telle sorte que lors d'un processus de freinage, les segments (223) du côté sortie des plaquettes de frein (203) ne puissent pas être soutenus en direction périphérique (210), dans la direction de rotation principale (220).

2. Agencement de freinage (1) selon la revendication précédente, les forces de freinage produites lors d'un processus de freinage dans la direction périphérique (210) ne pouvant être retransférées à l'étrier de frein (202) sur les plaquettes de frein (203) que par l'intermédiaire des segments (213) du côté entrée et les forces de freinage produites dans la direction périphérique (210) lors d'un processus de freinage ne pouvant être absorbées que par le système de palier de pivotement (204).

3. Agencement de freinage (1) selon l'une quelconque des revendications précédentes, l'élément formant boulon (214) s'étendant à travers les segments (213) du côté entrée des plaquettes de frein (203) et à cet effet, les plaquettes de frein (203) comportant chacune au moins un premier orifice de logement (233) et l'élément formant boulon (214) étant fixé et de préférence vissé sur le corps d'étrier (212) et l'élément formant boulon (214) devant être désolidarisé du corps d'étrier (212), pour pouvoir retirer les plaquettes de frein (203).

4. Agencement de freinage (1) selon l'une quelconque des revendications précédentes, le support de couple (205) comprenant au moins un élément de support (215) et les segments (223) du côté sortie pouvant être supportés au moins en direction radiale vers l'extérieur sur l'élément de support (215) et l'élément de support (215) étant fixé et de préférence vissé de manière amovible sur le corps d'étrier (212).

5. Agencement de freinage (1) selon la revendication précédente, un élément de support (215) commun pour les au moins deux plaquettes de frein (203) étant prévu et l'élément de support (215) s'étendant à travers les segments (223) du côté sortie des plaquettes de frein (203) et à cet effet, les plaquettes de frein (203) comportant au moins un deuxième orifice de logement (243) et l'élément de support (215) devant être désolidarisé du corps d'étrier (212), pour pouvoir retirer les plaquettes de frein (203).

6. Agencement de freinage (1) selon la revendication précédente, au moins les deuxièmes orifices de logement (243) présentant un surdimensionnement (243a) par rapport à l'élément de support (215) et le surdimensionnement (243a) étant dimensionné de telle sorte que lors d'un processus de freinage, les segments (223) du côté sortie ne puissent pas être soutenus sur l'élément de support (215) en direction périphérique (210) de la direction de rotation principale (220).

7. Agencement de freinage (1) selon la revendication 6, les premiers et deuxièmes orifices de logement (233, 243) présentant le même surdimensionnement (243a) par rapport à l'élément de support (215).

8. Agencement de freinage (1) selon l'une quelconque des revendications 5 à 7, au moins l'élément formant boulon (214) s'écoulant de manière excentrique à travers les premiers orifices de logement (233) et / ou au moins l'élément de support (215) s'écoulant de manière excentrique à travers les deuxièmes orifices de logement (243).

9. Agencement de freinage (1) selon l'une quelconque des revendications 5 à 8, l'élément de support (215) et l'élément formant boulon (214) présentant un écart (216) mutuel et les premiers et les deuxièmes orifices de logement (233, 243) de chaque fois une plaquette de frein (203) présentant un deuxième (226) écart mutuel et le premier écart (216) étant supérieur au deuxième écart (226).

10. Agencement de freinage (1) selon l'une quelconque des revendications précédentes, le système de palier de pivotement (204) et le support de couple (205) étant conçus de manière similaire, de telle sorte que lors d'une direction de rotation opposée à la direction de rotation principale (220), le support de couple (205) soit utilisable en tant que système de palier de pivotement (204) et le système de palier de pivotement (204) soit utilisable en tant que support de couple (205).

11. Agencement de freinage (1) selon l'une quelconque des revendications précédentes, les plaquettes de frein (203) étant conçues sous la forme de pièces invariantes (253) au moins au niveau de leurs raccordement sur le système de palier de pivotement (204) et le support de couple (205).

12. Agencement de freinage (1) selon l'une quelconque des revendications 4 à 11, et l'élément formant boulon (214) et / ou l'élément de support (215) reliant l'un à l'autre les systèmes de branche (232) et étant fixés sur au moins l'un des systèmes de branche (232).

13. Agencement de freinage (1) selon la revendication précédente, aucun des systèmes de branche (232) ne comportant une structure, laquelle s'écoule en direction axiale à côté du disque de frein (211) et dans la direction périphérique (210), à l'avant des plaquettes de frein (203) et sur laquelle les plaquettes de frein (203) pourraient être soutenues lors d'un processus de freinage.

14. Agencement de freinage (1) selon la revendication précédente, le système de pont de boîtier (242) entourant au moins deux d'encoches (242a) accessibles par l'extérieur en direction radiale et l'élément formant boulon (214) et l'élément de support (215) s'écoulant en-dessous de chaque fois une encoche (242a) .
